# EUROPÄISCHE PATENTSCHRIFT

(11) **EP 3 444 155 B1**
(45) Veröffentlichungstag und Bekanntmachung des Hinweises auf die Patenterteilung: **05.08.2020**
(21) Anmeldenummer: 18186400.0
(22) Anmeldetag: 30.07.2018
(51) Int. Cl.: B60T 13/26, B60T 13/66, B60T 13/68, B60T 7/20

(54) **ELEKTRONISCH GESTEUERTE ANHÄNGER-BREMSSTEUEREINHEIT UND ANHÄNGER-BREMSANLAGE**
ELECTRONICALLY CONTROLLED TRAILER BRAKE UNIT AND TRAILER BRAKE SYSTEM
UNITÉ DE COMMANDE DE FREIN DE REMORQUE À COMMANDE ÉLECTRONIQUE ET SYSTÈME DE FREINAGE DE REMORQUE

(30) Priorität: 14.08.2017 DE 102017118529
(43) Veröffentlichungstag der Anmeldung: 20.02.2019
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- WO-A1-2018/007799
- GB-A- 2 540 346

## Beschreibung

### TECHNISCHES GEBIET DER ERFINDUNG

Die Erfindung betrifft eine elektronisch gesteuerte Anhänger-Bremssteuereinheit (worunter auch eine Anhänger-Bremsregeleinheit zu subsumieren ist), die für eine Anhänger-Bremsanlage eines Anhängers eines Nutzfahrzeugzugs, der aus einem Zugfahrzeug und dem Anhänger gebildet ist, bestimmt ist. Des Weiteren betrifft die Erfindung eine Anhänger-Bremsanlage.

### STAND DER TECHNIK

Anhänger-Bremsanlagen eines Anhängers eines Zugfahrzeugs eines Nutzfahrzeugzugs verfügen einerseits über Betriebsbremsen und andererseits über Federspeicherbremsen, welche vorrangig zur Bereitstellung einer Feststellbremsfunktion dienen. Oftmals werden die Betriebsbremsen und Federspeicherbremsen mittels so genannter Kombi-Bremszylinder bereitgestellt.

Über die Betriebsbremsen wird eine Betriebsbremskraft an dem Anhänger erzeugt, welche von einem Bremssteuerdruck abhängig ist, der von dem Zugfahrzeug über einen Kupplungskopf Bremse an den Anhänger übertragen wird und von der Betätigung eines Bremspedals des Zugfahrzeugs durch den Fahrer abhängig sein kann. Die Vorgabe des Fahrers durch Betätigung des Bremspedals wird dann als elektronisches Bremssteuersignal und/oder als pneumatischer Bremssteuerdruck einer Modulator-Ventileinrichtung zugeführt, welche auch als EBS-Steuereinheit bezeichnet wird. Die Modulator-Ventileinrichtung steuert in Abhängigkeit von dem elektronischen Bremssteuersignal oder von dem pneumatischen Bremssteuerdruck einen Betriebsbremsdruck aus, der einer Betriebsbremskammer der Betriebsbremse zugeführt wird und ungefähr proportional zur Betriebsbremskraft ist. Die Modulator-Ventileinrichtung verhindert durch geeignete Modulation des Betriebsbremsdrucks (insbesondere ein in beliebiger Form oszillierendes Anheben und Absenken des Betriebsbremsdrucks) ein Blockieren des der Betriebsbremse zugeordneten Fahrzeugrads, um instabile Fahrzustände zu vermeiden und/oder den Bremsweg zu verkürzen.

Für eine Gewährleistung von Federspeicherbrems-Funktionen durch geeignete Be- und Entlüftung der Federspeicherbremse finden unterschiedliche Federspeicherbrems-Ventileinrichtungen Einsatz:
Eine Federspeicherbrems-Funktion in Form einer **"Parkfunktion"** wird üblicherweise durch eine als Parkventil ausgebildete Federspeicherbrems-Ventileinrichtung gewährleistet. Das Parkventil kann manuell von einem Benutzer oder Fahrer von einer Belüftungsstellung in eine Entlüftungsstellung (und umgekehrt) überführt werden, um bei ordnungsgemäß an dem Zugfahrzeug angekuppeltem Anhänger eine Federspeicherkammer der Federspeicherbremse in der Entlüftungsstellung zu entlüften, womit der Anhänger über die Federspeicherbremse zum Parken gebremst werden kann, und in der Belüftungsstellung zu belüften, womit die Federspeicherbremse gelöst wird und beispielsweise ein Fahrbeginn des Zugfahrzeugs mit angekuppeltem Anhänger möglich ist.

Eine Federspeicherbrems-Funktion in Form einer **"Lösefunktion"** wird üblicherweise durch eine als Löseventil ausgebildete Federspeicherbrems-Ventileinrichtung gewährleistet. Das Löseventil kann manuell von einem Benutzer oder Fahrer von einer Belüftungsstellung in eine Entlüftungsstellung (und umgekehrt) überführt werden, um für von dem Fahrzeug abgekuppeltem Anhänger in der Belüftungsstellung eine Belüftung der Federspeicherkammer der Federspeicherbremse aus einem Behälter des Anhängers herbeizuführen, womit auch ohne Zugfahrzeug ein Rangieren des Anhängers möglich ist, und in der Entlüftungsstellung die Federspeicherkammer der Federspeicherbremse (wieder) zu entlüften, womit nach einem Rangieren des Anhängers der Anhänger wieder gebremst ist.

Eine Federspeicherbrems-Funktion in Form einer **"Notbremsfunktion"** wird üblicherweise durch eine als Notbremsventil oder Anhängerbremsventil ausgebildete Federspeicherbrems-Ventileinrichtung gewährleistet. Kommt es zu dem Abriss eines Kupplungskopfes Vorrat oder einer Vorratsleitung, über welche der Anhänger mit Druckluft versorgt wird, kann eine ordnungsgemäße Abbremsung des Anhängers und damit unter Umständen auch des Nutzfahrzeugzuges über die Betriebsbremse in einigen Fällen nicht mehr gewährleistet werden. Die Notbremsfunktion leitet bei einem Abfall des Drucks an dem Kupplungskopf Vorrat oder in der Vorratsleitung automatisch eine Notbremsung ein, was entweder über eine Betätigung der Betriebsbremse unter pneumatischer Beaufschlagung der Betriebsbremskammer über die EBS-Steuereinheit aus einem Behälter mit Aufrechterhaltung der Modulation und Antiblockierfunktion oder aber über eine Betätigung der Federspeicherbremse erfolgen kann. Möglich ist auch, dass bis zu einem Restdruck in dem Behälter des Anhängers die Notbremsung über die modulierte Betätigung der Betriebsbremse erfolgt, während mit Unterschreitung des Restdrucks in dem Behälter eine Herbeiführung oder Fortsetzung der Notbremsung über die Betätigung der Federspeicherbremse erfolgt. Übliche Notbremsventile verfügen über einen pneumatischen Steueranschluss, dem der Druck an dem Kupplungskopf Vorrat oder in der Vorratsleitung zugeführt wird. Für hinreichenden Druck an dem Steueranschluss des Notbremsventils nimmt das Notbremsventil dann eine Belüftungsstellung ein, in welcher (für die Variante, dass die Notbremsfunktion über die Federspeicherbremse bereitgestellt werden soll) die Federspeicherbremse belüftet und damit gelöst ist. Unterschreitet hingegen der Druck an dem Steueranschluss des Notbremsventils einen Schwellwert, nimmt das Notbremsventil eine Entlüftungsstellung ein, in der die Federspeicherbremse entlüftet wird, womit diese dann die Notbremskraft erzeugt.

Um zu vermeiden, dass sich in unerwünschter Weise die Kräfte infolge einer pneumatischen Beaufschlagung der Federspeicherkammer und der Betriebsbremskammer überlagern und aufsummieren, kommen sogenannte Anti-Compound-Ventile zum Einsatz. Die Anti-Compound-Ventile sind im einfachsten Fall als Wechselventile ausgebildet. Ein erster Eingangsanschluss des Anti-Compound-Ventils ist dann mit der EBS-Steuereinheit so verbunden, dass an diesem der Betriebsbremsdruck wirkt. Ein zweiter Eingangsanschluss des Anti-Compound-Ventils ist mit der Federspeicherbrems-Ventileinrichtung verbunden. Ein Ausgangsanschluss des Anti-Compound-Ventils ist mit der Federspeicherkammer der Federspeicherbremse verbunden. Der Einsatz des Anti-Compound-Ventils hat zur Folge, dass bei einer Entlüftung des zweiten Eingangsanschlusses des Anti-Compound-Ventils durch die Federspeicherbrems-Ventileinrichtung, aber Aussteuerung eines Betriebsbremsdrucks durch die EBS-Steuereinheit, eine modulierte Abbremsung über die Betriebsbremse möglich ist, während bei hinreichendem Betriebsbremsdruck, der über das Anti-Compound-Ventil auch der Federspeicherkammer zugeführt wird, die Federspeicherbremse gelöst bleibt, sodass diese die Regelung der auf den Anhänger wirkenden Bremskraft durch die Regelung der Betriebsbremskraft nicht beeinträchtigt. Mit zunehmender Verringerung des von der EBS-Steuereinheit ausgesteuerten Betriebsbremsdrucks infolge einer zunehmenden Entleerung eines Druckluft bereitstellenden Behälters wird infolge des Anti-Compound-Ventils eine zunehmende Teilbremskraft von der Federspeicherbremse übernommen, sodass dann die Bremskraft gemeinsam von der Federspeicherbremse und der Betriebsbremse erzeugt wird.

DE 35 22 183 C1 offenbart die Gewährleistung einer Notbremsfunktion über eine Entlüftung der Federspeicherbremse, wobei hier aber für eine Erkennung eines Blockierens eines Fahrzeugrads die Entlüftung der Federspeicherbremse gestoppt wird und eine Belüftung der Federspeicherbremse solange erfolgt, bis erkannt wird, dass das blockierende Fahrzeugrad wieder gelöst ist. Eine Gewährleistung einer derartigen geregelten pneumatischen Beaufschlagung der Federspeicherkammer einer Federspeicherbremse unabhängig von dem Betriebsbremsdruck wird im Folgenden auch unter eine **"geregelte Federspeicher-Notbremsfunktion"** subsumiert.

Die Druckschrift EP 1 188 634 B1 offenbart eine Anhänger-Bremsanlage mit einem manuell über einen Betätigungsschieber betätigbaren Parkventil, einem manuell über einen Betätigungsschieber betätigbaren Löseventil sowie einem Notbremsventil. Das Notbremsventil wird hier von dem Druck eines Behälters, der über den Kupplungskopf Vorrat befüllt wird, gesteuert. Während im normalen Fahrbetrieb einem Steueranschluss der EBS-Steuereinheit über das Notbremsventil der Bremssteuerdruck des Kupplungskopfs Bremse zugeführt wird, führt eine Veränderung der Ventilstellung des Notbremsventils infolge eines sich verringernden Drucks in dem Behälter dazu, dass dem Steueranschluss der EBS-Steuereinheit der Druck des Behälters zugeführt wird. Gleichzeitig überbrückt das Notbremsventil ein den Druck in der Federspeicherkammer der Federspeicherbremse sicherndes Rückschlagventil und beaufschlagt die Federspeicherkammern der Federspeicherbremsen ebenfalls mit dem Druck in dem Behälter. Auf diese Weise soll eine Sicherungslücke geschlossen werden, welche darin gesehen wird, dass sich ein abgestelltes Fahrzeug bei einem durch das Rückschlagventil in der Federspeicherkammer gesicherten Lösedruck und bei Bremsung des Fahrzeugs über die Betriebsbremse ohne manuelle Überführung des Parkventils in die Entlüftungsstellung infolge eines schleichenden Druckverlusts des Behälters ungewollt in Bewegung setzt. Eine Gewährleistung einer derartigen automatischen Verbindung der Federspeicherkammer einer Federspeicherbremse mit einem Behälter wird im Folgenden auch unter eine **"behältergesteuerte Feststellbremsfunktion"** subsumiert.

Die Druckschrift DE 10 2005 019 479 B3 offenbart eine Ventileinheit, in dessen Gehäuse ein Notbremsventil, ein Parkventil, ein Löseventil, ein Überströmventil und ein manuell betätigbares Hebe-Senk-Schaltventil für eine Steuerung der Be- und Entlüftung einer Luftfederungsanlage integriert sind. Die Ventileinheit steuert unmittelbar die pneumatische Beaufschlagung einer Federspeicherkammer einer Federspeicherbremse sowie über eine EBS-Steuereinheit die Beaufschlagung einer Betriebsbremskammer der Betriebsbremse.

Die **Druckschriften** DE 10 2007 053 764 B4 und DE 10 2007 053 765 B4 offenbaren eine Anhänger-Bremsanlage, bei welcher ein Parkventil und ein Löseventil an ein Notbremsventil angeflanscht sind. Hier sind ein Schnelllöseventil und ein Anti-Compound-Ventil in die EBS-Steuereinheit integriert. Für den Fall eines Einbruchs des Drucks in einer Vorratsleitung (in einer Notbremssituation oder für ein Abkuppeln des Anhängers) erfolgt eine automatische Überführung des Parkventils in die Entlüftungsstellung. Diese automatische Überführung wird durch einen Kolben gewährleistet, der lediglich einseitig mit dem Ventilschieber des Parkventils gekoppelt ist, in Richtung der Entlüftungsstellung des Ventilschiebers von einer Feder beaufschlagt ist und in entgegengesetzte Richtung von dem Druck in der Vorratsleitung beaufschlagt ist. Eine Gewährleistung einer derartigen automatischen Überführung eines Parkventils in eine Entlüftungsstellung wird im Folgenden auch unter eine **"automatische Parkventilbetätigung"** subsumiert.

Die **Druckschrift** GB 2492124 A offenbart eine Anhänger-Bremsanlage, bei welcher ein Steueranschluss eines Notbremsventils über ein Magnetventil mit dem Druck in einer Vorratsleitung beaufschlagt ist. Eine Notbremsung über eine Entlüftung der Federspeicherbremse infolge der Umschaltung des Notbremsventils erfolgt hierbei durch elektrische Ansteuerung des Magnetventils derart, dass der Druckabfall in der Vorratsleitung nicht oder erst verzögert zu dem Steueranschluss gelangt. Eine Gewährleistung einer derartigen Verhinderung einer Überführung eines Parkventils in eine Entlüftungsstellung wird im Folgenden auch unter eine **"Notbremsventil-Betätigungsverhinderung"** subsumiert.

Die nicht vorveröffentlichte Patentanmeldung mit dem amtlichen Aktenzeichen GB 1 611 713.7 offenbart ein Federspeicher-Steuerventil, über welches (unter Zwischenschaltung eines Anti-Compound-Ventils) die pneumatische Beaufschlagung einer Federspeicherbremse gesteuert werden kann. Vorgeschlagen wird der Einsatz einer Immobilisiereinrichtung, welche so ausgestaltet ist und auf das Federspeicher-Steuerventil einwirkt, dass bei Aktivierung der Immobilisiereinrichtung das Federspeicher-Steuerventil eine Entlüftung der Federspeicherbremse ermöglicht, aber eine Belüftung verhindert. Mittels einer derartigen Ausgestaltung kann eine nicht autorisierte Bewegung des Anhängers, beispielsweise nach einem Diebstahl desselben, verhindert werden.

Eine Aktivierung der Immobilisiereinrichtung kann beispielsweise über ein Smartphone durch den Benutzer erfolgen, wenn dieser einen Diebstahl des Anhängers feststellt. Auch möglich ist eine vorsorgliche Aktivierung durch den Fahrer zur Vermeidung eines Diebstahls bei einem Abstellen des Anhängers. Auf entsprechende Weise kann eine Deaktivierung der Immobilisiereinrichtung, mit welcher dann wieder die Bewegung des Anhängers ermöglicht wird, erfolgen. Die Aktivierung und Deaktivierung kann eine Authentifizierung erfordern, bspw. durch Eingabe eines Pins oder mittels Durchführung einer vorbestimmten Aktivierungsfolge wie die Betätigung des Zündschlüssels und des Betriebsbremspedals Eine Gewährleistung einer derartigen Verhinderung einer Bewegung des Anhängers wird im Folgenden auch unter eine **"Immobilisierfunktion"** subsumiert.

Hinsichtlich weiteren Standes der Technik wird beispielsweise auf die Druckschriften DE 10 2000 053 529 B4, DE 10 2012 101 871 B4, DE 10 2013 100 537 A1, WO 2011/003491 A1 und DE 10 2013 100 538 B4 verwiesen.

DE 10 2009 031 785 A1 offenbart eine pneumatische Bremsanlage für ein Anhängefahrzeug, welche einen EBS-Modulator aufweist. Der EBS-Modulator ist als Baueinheit ausgebildet, in welche elektromagnetisch ansteuerbare Ventile sowie eine elektronische Steuereinrichtung integriert sind. Eine beabstandet von dem EBS-Modulator angeordnete manuelle Betätigungseinheit weist ein manuell betätigbares Parkventil sowie ein manuell betätigbares Löseventil auf. Zur Steuerung der Federspeicherbremsen mit der manuellen Betätigungseinheit ist ein pneumatischer Ausgang der manuellen Betätigungseinheit über ein Anti-Compound-Ventil in Ausbildung als Wechselventil mit den Federspeicherkammern der Federspeicherbremsen verbunden. Ein anderer Eingang des Anti-Compound-Ventils ist über ein Federspeicherneutralisierventil, welches ein 3/2-Magnetventil ist, mit einem Vorratsbehälter der Bremsanlage verbunden. Die elektronische Steuerung des Federspeicherneutralisierventils erfolgt über den EBS-Modulator. Das Federspeicherneutralisierventil soll eine Druckstabilisierung des Drucks in den Federspeicherkammern der Federspeicherbremsen auf einem Druckniveau gewährleisten, so dass keine unerwünschte Bremsbetätigung durch die Federspeicherbremsen erfolgt. Möglich ist hierbei, dass das Federspeicherneutralisierventil den ABS-modulierten Druck stabilisiert, wobei abgesehen von geringen Druckschwankungen der Druck auf einem Mindestniveau gehalten wird, oder das Federspeicherneutralisierventil hält einen von der ABS-Druckmodulation unbeeinflussten Druck (hier den Druck in dem Vorratsbehälter) in den Federspeicherkammern der Federspeicherbremsen aufrecht. Für eine weitere in DE 10 2009 031 785 A1 offenbarte Ausführungsform ist kein Wechselventil vorhanden, wobei in diesem Fall ebenfalls die beiden Eingänge des Federspeicherneutralisierventils mit dem Vorratsbehälter und dem pneumatischen Ausgang der manuellen Betätigungseinheit verbunden sind, während der Ausgang des Federspeicherneutralisierventils dann unmittelbar mit den Federspeicherkammern der Federspeicherbremsen verbunden sind. Vorgeschlagen wird auch eine bauliche Integration des Federspeichernatralisierventils und ggf. des Wechselventils in den EBS-Modulator.

DE 10 2015 116 317 A1 betrifft eine Bremsanlage eines Zugfahrzeugs und offenbart eine als Baueinheit ausgebildete Federspeicherbrems-Ventileinrichtung, in der eine Steuereinheit eine Be- und Entlüftung einer Steuerleitung gewährleistende 2/2-Magnetvenile (insbesondere pulsend) ansteuert. Die Steuerleitung ist über einen ersten Steuerleitungszweig mit darin angeordneter Drossel mit einer Federspeicherbremsleitung verbunden. Ein zweiter Steuerleitungszweig steuert ein Relaisventil an, dessen Ausgang ebenfalls mit der Federspeicherbremsleitung verbunden ist. Zur Erzeugung eines modulierten Drucks in der Federspeicherbremsleitung kann in der Federspeicherbrems-Ventileinrichtung auch ein elektropneumatischer Modulator (EPM) Einsatz finden, der ausgebildet sein soll wie bei elektronisch geregelten Betriebsbremsen (EBS). An ein Gehäuse der Federspeicherbrems-Ventileinrichtung kann ein Magnetventil angeflanscht werden, welches der Realisierung einer Testfunktion und/oder zur Steuerung von Anhängerbremsen dient, wobei dieses Magnetventil als übliches und in hoher Stückzahl gefertigtes ASR-Magnetventil (Antischlupfregelungsventil) ausgebildet sein kann. Alternativ kann ein derartiges Magnetventil auch in das Gehäuse der Federspeicherbremsventileinrichtung integriert sein. Angeregt wird in DE 10 2015 116 317 A1 eine Zusammenfassung der elektropneumatischen Parkbremssteuereinrichtung mit einem anderen elektronisch gesteuerten Fahrzeugsystem zu einer Baueinheit mit einer dann multifunktionalen gemeinsamen Nutzung der elektronischen Steuereinrichtung. Hierbei wird konkret die Zusammenfassung mit einer Luftaufbereitungsanlage angeregt, die als vorteilhaft angesehen wird, da in diesem Fall eine Vorratsleitung zur elektropneumatischen Parkbremssteuereinrichtung entfallen kann. Möglich ist des Weiteren, dass Magnetventile zur Gewährleistung einer Streckbremsfunktion an ein Gehäuse der Federspeicherbrems-Ventileinrichtung angeflanscht oder in dieses integriert werden.

DE 10 2006 036 748 A1 offenbart eine elektrisch gesteuerte Bremsanlage eines Zugfahrzeugs mit einem als Baueinheit ausgebildeten Modulator, der über eine externe elektronische Steuereinheit angesteuert wird. Das Ausgangssignal des Modulators ist über ein hier als Überlastschutzventil oder "Select-High-Ventil" bezeichnetes Anti-Compound-Ventil mit Federspeicherkammern von Federspeicherbremsen verbunden. Dem anderen Eingang des Anti-Compound-Ventils wird der Druck einer Betriebsbremskammer der Betriebsbremsen des Zugfahrzeugs zugeführt, welcher unmittelbar vom Fahrer über ein Bremspedal vorgegeben wird. Die Druckschrift WO 2018/007799 A1, die Stand der Technik gemäß Art. 54 (3) EPÜ darstellt, offenbart eine Anhängerbremsanlage, wobei die einzelnen Ventileinrichtungen als singuläre Bauelement ausgebildet sind. Auch gemäß GB 2 540 346 A sind die relevante Bauelemente separat ausgebildet, beabstandet voreinander angeordnet und über externe Leitungsverbindungen miteinander verbunden.

### AUFGABE DER ERFINDUNG

Der Erfindung liegt die Aufgabe zugrunde, eine Anhänger-Bremssteuereinheit (worunter auch eine Anhänger-Bremsregeleinheit zu subsumieren ist) und eine Anhänger-Bremsanlage vorzuschlagen, welche insbesondere hinsichtlich
- des Bauaufwands,
- der Baugröße,
- des Montageaufwandes,
- einer multifunktionalen Nutzung einer Steuereinheit,
- der Wechselwirkung zwischen einer Betriebsbremse und einer Federspeicherbremse und/oder
- hinsichtlich einer Gewährleistung mindestens einer Federspeicherbrems-Funktion verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Sofern hinsichtlich der Beschreibung der Erfindung von einer Steuerung, einem Steuern oder eine Steuereinheit u. ä. die Rede ist, umfasst dies auch eine Regelung, ein Regeln oder eine Regeleinheit.

Die erfindungsgemäße elektronisch gesteuerte Anhänger-Bremssteuereinheit ist als eine Baueinheit ausgebildet. Diese kann ein Gehäuse aufweisen, in welchem und/oder an welchem sämtliche Bauelemente der Anhänger-Bremssteuereinheit angeordnet sind. Die Anhänger-Bremssteuereinheit verfügt insbesondere nicht über einzelne, singuläre Bauelemente, welche über externe, freie Leitungsverbindungen miteinander verbunden sind. Das Gehäuse verfügt beispielsweise über eine beliebige Zahl von Gehäuseteilen oder Teilgehäusen, welche auch über Zwischenwände miteinander verbunden sein können, oder auch miteinander verbundene Gehäusemodule.

In der erfindungsgemäßen elektronisch gesteuerten Anhänger-Bremssteuereinheit ist einerseits eine elektronisch gesteuerte Modulator-Ventileinrichtung angeordnet, welche dazu dient, einen modulierten Betriebsbremsdruck zu erzeugen, welcher in ausgewählten Betriebssituationen oszilliert oder geregelt ist zur Vermeidung oder Einschränkung eines Schlupfes oder eines Blockierens eines Fahrzeugrads gegenüber der Fahrbahn. Erfindungsgemäß ist darüber hinaus in der Baueinheit eine Federspeicherbrems-Ventileinrichtung angeordnet. Die Federspeicherbrems-Ventileinrichtung ermöglicht eine Erzeugung eines für eine Federspeicherbremse bestimmten Federspeicherbremsdrucks, welcher von Ventilstellungen von Ventilelementen der Federspeicherbrems-Ventileinrichtung abhängig ist, die wiederum beispielsweise abhängig sein können von pneumatischen Drücken wie einem Bremssteuerdruck oder einem Vorratsleitungsdruck, einer elektronischen Ansteuerung, einem von einem Benutzer vorgegebenen pneumatischen oder elektrischen Signal u. ä. Hierbei ist der von der Federspeicherbremse-Ventileinrichtung erzeugte Federspeicherbremsdruck unabhängig von dem von der Modulator-Ventileinrichtung ausgesteuerten Betriebsbremsdruck, wobei der von der Federspeicherbremse-Ventileinrichtung erzeugte Federspeicherbremsdruck einerseits und der von der Modulator-Ventileinrichtung ausgesteuerte Betriebsbremsdruck andererseits einem Anti-Compound-Ventil zugeführt werden, dessen Ausgang mit der Federspeicherbremse verbunden ist. Die Modulator-Ventileinrichtung und/oder die Federspeicherbrems-Ventileinrichtung können im Rahmen der Erfindung mit einer beliebigen Anzahl von Ventilen gebildet sein, welche bspw. einzeln in der Baueinheit angeordnet sein können und über in der Baueinheit verlaufende oder sogar teilweise außerhalb derselben verlaufende Leitungen oder Kanäle miteinander verbunden sind oder zu integrierten oder angeflanschten Teilmodulen der Baueinheit zusammengefasst sein können. Des Weiteren können die in der Modulator-Ventileinrichtung und in der Federspeicherbrems-Ventileinrichtung eingesetzten Ventile beliebiger Bauart sein, beispielsweise als pneumatisch gesteuerte Ventile, als elektromagnetisch vorgesteuerte Ventile oder direkt elektromagnetisch geschaltete Ventile, und/oder als Sitzventile oder als Schieberventile ausgebildet sein. Die Ventile können eine beliebige Anzahl von Anschlüssen und/oder Ventilstellungen aufweisen. Möglich ist auch, dass in einem Ventil der Modulator-Ventileinrichtung oder der Federspeicherbrems-Ventileinrichtung für die Ausgestaltung des Ventils als Sitzventil ein Ventilsitz von dem Gehäuse ausgebildet ist oder für die Ausgestaltung des Ventils als Schieberventil ein Aufnahmekörper für den Ventilschieber von dem Gehäuse selbst ausgebildet ist.

Mittels der Integration einerseits der Modulator-Ventileinrichtung und andererseits der Federspeicherbrems-Ventileinrichtung kann eine kompakte und multifunktionale Anhänger-Bremssteuereinheit geschaffen werden. Ein Leitungsaufwand sowie ein erhöhter Montageaufwand für eine Montage einerseits der Modulator-Ventileinrichtung und andererseits der Federspeicherbrems-Ventileinrichtung an den Anhänger sowie die Herstellung der erforderlichen Leitungsverbindungen zwischen der Modulator-Ventileinrichtung und der Federspeicherbrems-Ventileinrichtung gemäß dem Stand der Technik wird durch erfindungsgemäße Ausgestaltung reduziert oder entbehrlich gemacht.

Unter Umständen kann in der erfindungsgemäßen Anhänger-Bremssteuereinheit auch auf besonders einfache Weise eine Wechselwirkung zwischen der Modulator-Ventileinrichtung und der Federspeicherbrems-Ventileinrichtung erzeugt werden, womit sich unter Umständen auch ein erweiterter Funktionsumfang ergeben kann. Schließlich können durch die Integration der Modulator-Ventileinrichtung und der Federspeicherbrems-Ventileinrichtung in ein Gehäuse einer Anhänger-Bremssteuereinheit auch Fehlerquellen infolge einer falschen Montage der Ventileinrichtungen, infolge von Undichtigkeiten der Leitungsverbindungen zwischen den Ventileinrichtungen und infolge von Beschädigungen der Leitungen reduziert werden.

Für einen weiteren Vorschlag der Erfindung ist die in die Anhänger-Bremssteuereinheit integrierte Federspeicherbrems-Ventileinrichtung geeignet ausgebildet, um mindestens eine Federspeicherbremsfunktion auszuführen. Diese Federspeicherbremsfunktion kann infolge einer manuellen Betätigung durch den Benutzer, infolge einer Steuerung durch eine Steuereinheit oder auch infolge einer automatischen Betätigung infolge der sich verändernden Betriebsbedingungen, insbesondere infolge sich veränderter Druckbedingungen wie beispielsweise ein Abfall des Drucks in einer Vorratsleitung, ausgeführt werden. Vorzugsweise erfolgt die Durchführung der Federspeicherbremsfunktion mit einer Steuerung durch eine Steuereinheit, welche auch für die Steuerung der Modulator-Ventileinrichtung zuständig ist, womit diese Steuereinheit multifunktional genutzt ist.

Für die Ausgestaltung der Federspeicherbremsfunktion gibt es im Rahmen der Erfindung vielfältige Möglichkeiten, wovon im Folgenden lediglich einige (in die Erfindung nicht beschränkender Weise) angeführt werden:
- Möglich ist, dass die Federspeicherbremsfunktion eine **"Parkfunktion"** ist. Unter einer Parkfunktion im Sinne der Erfindung wird insbesondere eine Bereitstellung einer Parkbrems- oder Feststellbremskraft durch Entlüftung der Federspeicherbremse und Beseitigung einer Parkbrems- oder Feststellbremskraft durch Belüftung der Federspeicherbremse verstanden, was ausschließlich oder auch bei an einem Vorratsleitungs-Eingangsanschluss der Anhänger-Bremssteuereinheit anliegendem Druck eine Entlüftung eines Federspeicherbremse-Ausgangsanschlusses gewährleistet wird. Die mittels der Parkfunktion herbeigeführte Parkbrems- oder Feststellbremskraft kann im Rahmen eines Parkens des Anhängers, bei welchem der Anhänger gegen ein Wegrollen gesichert sein muss, genutzt werden. Im Rahmen der Parkfunktion erfolgt das Belüften und Entlüften der Federspeicherbremse entsprechend einer Vorgabe eines Benutzers. Diese Vorgabe kann durch willkürliche Betätigung eines Ventilschiebers der Federspeicherbrems-Ventileinrichtung durch den Benutzer bei stehendem Anhänger eingeleitet und durchgeführt werden. Möglich ist auch, dass der Benutzer einen Ventilschieber einer externen von der Anhänger-Bremssteuereinheit angeordneten Ventileinrichtung betätigen kann, womit dann ein Steuerdruck erzeugt wird, der einem Steueranschluss der Anhänger-Bremssteuereinheit geführt wird. Es ist aber auch möglich, dass ein Benutzer einen elektrischen Signalgeber wie einen Schalter im Bereich des Anhängers, des Zugfahrzeugs oder der Fahrerkabine betätigt oder über ein Smartphone ein Signal an eine Steuereinrichtung der Anhänger-Bremssteuereinheit übermittelt, um die Ausführung der Parkfunktion, insbesondere das Be- und Entlüften, auszulösen.
- Die Federspeicherbremsfunktion kann eine **"Lösefunktion"** sein. Unter einer Lösefunktion im Sinne der Erfindung wird eine Belüftung eines Federspeicherbremse-Ausgangsanschlusses mit Druckluft infolge einer Vorgabe durch den Benutzer verstanden, welche von einem Behälter einem Behälteranschluss der Anhänger-Bremssteuereinheit zugeführt wird, wenn an einem Vorratsleitungs-Eingangsanschluss der Anhänger-Bremssteuereinheit kein Druck anliegt, was insbesondere für abgekuppelten Anhänger der Fall ist. Die Vorgabe durch den Benutzer kann durch willkürliche Betätigung eines Ventilschiebers der Federspeicherbrems-Ventileinrichtung durch den Benutzer bei stehendem Anhänger eingeleitet und durchgeführt werden. Möglich ist auch, dass der Benutzer einen Ventilschieber einer externen von der Anhänger-Bremssteuereinheit angeordneten Ventileinrichtung betätigen kann, womit dann ein Steuerdruck erzeugt wird, der einem Steueranschluss der Anhänger-Bremssteuereinheit geführt wird. Es ist aber auch möglich, dass ein Benutzer einen elektrischen Signalgeber wie einen Schalter im Bereich des Anhängers, des Zugfahrzeugs oder der Fahrerkabine betätigt oder über ein Smartphone ein Signal an eine Steuereinrichtung der Anhänger-Bremssteuereinheit übermittelt, um die Ausführung der Lösefunktion, insbesondere das Be- und Entlüften, auszulösen.

- Möglich ist, dass die Federspeicherbremsfunktion eine **"Reset-to-Ride-Funktion"** ist. Unter einer Reset-to-Ride-Funktion im Sinne der Erfindung wird eine automatisch durch eine elektronische Steuereinheit herbeigeführte Belüftung der Federspeicherbremsen verstanden, mit welcher der Anhänger für einen bevorstehenden oder bereits initiierten Fahrbetrieb mit einer sich von Null erhöhenden Fahrgeschwindigkeit vorbereitet wird. Die elektronische Steuereinheit wertet hierzu Betriebsgrößen aus, um einen bevorstehenden oder bereits initiierten Fahrbetrieb zu detektieren. Eine derartige Detektion kann beispielsweise auf Grundlage eines Sensors erfolgen, welcher das Öffnen und Schließen einer Fahrzeugtür erkennt, auf Grundlage eines Sitzbelegungssensors erfolgen, welcher erkennt, dass sich der Fahrer auf den Fahrzeugsitz setzt, auf Grundlage eines Fahrpedalsensors erfolgen, welcher eine Betätigung eines Pedals durch den Fahrer erkennt, auf Grundlage eines Zündschalters erfolgen, welcher die Betätigung der Zündung der Brennkraftmaschine erkennt, auf Grundlage eines Getriebesensors erfolgen, der das Einlegen eines Vorwärts- oder Rückwärtsganges erkennt, auf Grundlage eines Bewegungssensors wie eines Geschwindigkeitssensors oder eines GPS-Signals erfolgen, welcher erkennt, dass sich der Anhänger in Bewegung setzt, oder auf Grundlage eines Bremslichtschalters erfolgen, welcher die Betätigung des Bremslichts infolge einer Betätigung des Bremspedals erkennt, ohne dass eine Beschränkung der Erfindung auf die genannten Ausführungsbeispiele erfolgen soll. Eine derartige Reset-to-Ride-Funktion findet beispielsweise dann Einsatz, wenn der Fahrer bei einem Fahrbeginn vergessen hat, die Federspeicherbremse des Anhängers zu lösen.
- Möglich ist, dass die Federspeicherbremsfunktion eine **"Schubvermeidungsfunktion"** ist. Unter einer Schubvermeidungsfunktion im Sinne der Erfindung wird eine automatische Betätigung der Federspeicherbremsen durch eine elektronische Steuereinheit verstanden, wenn die elektronische Steuereinheit detektiert, dass sich der Antriebsstrang des Zugfahrzeugs in einem Schubbetrieb befindet, sodass an dem Zugfahrzeug eine Bremswirkung durch den Antriebsstrang erzeugt wird, ohne dass der Benutzer eine Betriebsbremse oder Federspeicherbremse betätigt. Um ein Auflaufen des Anhängers auf das Zugfahrzeug zu vermeiden, führt die Schubvermeidungsfunktion bei Detektion eines Schubbetriebs eine dosierte, gesteuerte oder geregelte Bremswirkung über die Federspeicherbremsen des Anhängers herbei, wobei die Feststellbremskraft mit der Bremskraft infolge des Schubbetriebs des Antriebsstrangs des Zugfahrzeugs korrelieren kann. Eine Detektion eines Schubbetriebs durch die elektronische Steuereinheit kann beispielsweise anhand eines Fahrbahn- oder Fahrzeugneigungssensors, eines Sensors, welcher den Betrag und/oder die Richtung eines in dem Antriebsstrang wirkenden Antriebsmoments, eines Getriebesensors zwecks Detektierens eines Herunterschaltens erfolgen, um lediglich einige nicht beschränkende Beispiele zu nennen.
- Bei der Federspeicherbremsfunktion kann es sich auch um eine **"Notbremsfunktion"** handeln. Mittels der Notbremsfunktion ist bei einem Abfall eines an einem Vorratsleitungs-Eingangsanschluss der Anhänger-Bremssteuereinheit anliegenden Drucks eine Entlüftung eines Federspeicherbremse-Ausgangsanschlusses herbeiführbar, so dass eine Notbremsung des Anhängers über die Federspeicherbremse erfolgt. Im Rahmen der Erfindung kann ein für die Gewährleistung der Notbremsfunktion verantwortliches Notbremsventil pneumatisch, elektronisch oder elektropneumatisch gesteuert sein.
- Möglich ist auch, dass die Federspeicherbremsfunktion eine **"Overridefunktion"** ist, mittels welcher eine Ausführung der zuvor erläuterten Notbremsfunktion von einem weiteren Kriterium wie einer Betriebsgröße oder einem Druck abhängig gemacht wird. Mittels der Overridefunktion wird somit trotz eines Abfalls eines an einem Vorratsleitungs-Eingangsanschluss der Anhänger-Bremssteuereinheit anliegenden Drucks (bspw. unter einen vorgegebenen Schwellwert) eine Entlüftung eines Federspeicherbremse-Ausgangsanschlusses verhindert, bis mindestens ein weiteres Kriterium erfüllt ist. Reicht beispielsweise ein Druck eines Behälters für eine Durchführung einer geregelten Notbremsung über die Betriebsbremse mit einer Antiblockierfunktion aus, kann mittels der Overridefunktion vermieden werden, dass die Notbremsfunktion mit der Entlüftung des Federspeicherbremse-Ausgangsanschlusses ausgeführt wird. Erst wenn das weitere Kriterium erfüllt ist (für das genannte Ausführungsbeispiel: der Druck in dem Behälter soweit abgefallen ist, dass ein minimaler Druck für eine hinreichende Betätigung der Betriebsbremse nicht mehr gewährleistet ist), kann dann die Overridefunktion aufgehoben werden und die Entlüftung des Federspeicherbremse-Ausgangsanschlusses erfolgen, womit die Abbremsung des Anhängers (auch oder ausschließlich) durch die Federspeicherbremse erfolgt. Möglich ist auch, dass für eine Override-Funktion ein Steueranschluss eines Notbremsventils der Anhänger-Bremssteuereinheit über ein Magnetventil mit dem Vorratsleitung-Eingangsanschluss verbunden ist. Fällt in einer Notbremssituation der Druck an dem Vorratsleitung-Eingangsanschluss ab, kann das Auslösen der Notbremsfunktion unterbunden oder verzögert werden, indem das Magnetventil in seine Sperrstellung überführt wird. Eine Überführung des Magnetventils in die Durchlassstellung mit der dann erfolgenden Auslösung der Notbremsfunktion kann dann von weiteren Betriebs- und/oder Umgebungsparametern oder auch einem von dem Fahrer vorgegebenen Signal abhängig gemacht werden.
- Eine weitere im Rahmen der Erfindung genutzte Federspeicherbremsfunktion kann eine **"Federspeicherbremse-Immobilisierfunktion"** sein. Mittels einer derartigen Federspeicherbremse-Immobilisierfunktion wird ein Halten des Drucks an dem Federspeicherbremse-Ausgangsanschluss sowie eine Entlüftung des Federspeicherbremse-Ausgangsanschlusses wie im normalen Betrieb ermöglicht, während nach Ausführung der Federspeicherbremse-Immobilisierfunktion eine Belüftung des Federspeicherbremse-Ausgangsanschlusses nur nach einer Authentifizierung möglich ist. Anders gesagt kann nach Ausführung der Federspeicherbremse-Immobilisierfunktion der Druck in der Federspeicherbremse nur noch gehalten werden oder verringert werden. Ist einmal eine Federspeicherbremse entlüftet, kann nach Ausführung der Federspeicherbremse-Immobilisierfunktion infolge der Entlüftung der Federspeicherbremse eine Bewegung des Anhängers nicht mehr erfolgen. Vielmehr setzt dies die Authentifizierung voraus. Die Federspeicherbremse-Immobilisierfunktion kann beispielsweise aktiviert werden über ein mit einer Steuereinheit der Anhänger-Bremssteuereinheit kommunizierendes Mobiltelefon, wenn der Anhänger gestohlen worden ist. Möglich ist auch, dass bei einem Abstellen des Fahrzeugs automatisiert die Federspeicherbremse-Immobilisierfunktion ausgeführt wird und diese dann durch den Benutzer oder Fahrer durch Authentifizierung rückgängig gemacht werden muss. Eine Authentifizierung kann über eine Eingabe eines Pins in eine Eingabeeinrichtung der Fahrerkabine oder an anderer Stelle des Nutzfahrzeugzugs, eine Durchführung einer Authentifizierungssequenz wie die Durchführung einer Betätigung einzelner Bedienelemente des Nutzfahrzeugzugs wie von Pedalen und des Zündschlüssels in einer vorbestimmten Reihenfolge, über ein Mobiltelefon u. ä. erfolgen. Möglich ist auch, dass eine Authentifizierung über einen Datenaustausch zwischen einem Zugfahrzeug und einem Anhänger erfolgt, wobei in diesem Fall das Zugfahrzeug und der Anhänger über eine kabellose Signalverbindung oder eine schnurgebundene Datenverbindung (insbesondere durch einen elektrischen Kupplungskopf oder eine elektrische Schnittstelle zwischen dem Zugfahrzeug und dem Anhänger oder durch ein sogenanntes EPI-Modul, wie dieses bspw. in der Patentanmeldung EP 2 821 262 A2 beschrieben ist) zur Ermöglichung des Datenaustausches verbunden sind. Um hier lediglich ein Beispiel zu nennen, kann die Federspeicherbremse-Immobilisierfunktion nur dann deaktiviert werden, wenn über die Datenverbindung erkannt wird, dass der Anhänger von einem autorisierten Zugfahrzeug (beispielsweise ein Zugfahrzeug eines Fuhrparks eines Unternehmens) bewegt wird. In diesem Fall kann das Zugfahrzeug eine dem Zugfahrzeug zugeordnete Kennung übermitteln, welche dann mit der mindestens einen Kennung abgeglichen wird, die in der Steuereinheit des Anhängers als zulässige Kennung abgespeichert ist. Ebenfalls möglich ist, dass ein Mobiltelefon mit dem Zugfahrzeug verbunden wird, wobei dies automatisch, insbesondere über eine drahtlose Verbindung, erfolgen kann, wenn sich das Mobiltelefon im Zugfahrzeug befindet. In diesem Fall kann auch eine Authentifizierung von dem Mobiltelefon über das Zugfahrzeug zu dem Anhänger zum Deaktivieren der Federspeicherbremse-Immobilisierfunktion übertragen werden. Hinsichtlich weiterer Möglichkeiten und Ausgestaltungen der Federspeicherbremse-Immobilisierfunktion und/oder der Authentifizierung wird auf die nicht vorveröffentlichte Patentanmeldung mit dem amtlichen Aktenzeichen GB 1 611 713.7 verwiesen.
- Möglich ist auch, dass eine Federspeicherbremsfunktion eine **"geregelte Federspeicherbremsfunktion"** ist. Hierunter wird eine Regelung eines Drucks an einem Federspeicherbremse-Ausgangsanschluss verstanden, welche zu einer Reduzierung eines Schlupfes zwischen einem einer Federspeicherbremse zugeordneten Fahrzeugrades und einer Fahrbahn und/oder zur Verhinderung eines Blockierens des Fahrzeugrades infolge einer Betätigung der Federspeicherbremse erfolgt. Anders gesagt wird mittels der geregelten Federspeicher-Notbremsfunktion zur Herbeiführung einer Bremswirkung über die Federspeicherbremse nicht ausschließlich eine Entlüftung durchgeführt, sondern es erfolgt ein gezieltes Halten eines Drucks oder sogar eine modellierte Be- und Entlüftung zur Reduzierung des Schlupfes oder zur Verhinderung eines Blockierens. Auf diese Weise kann eine Antiblockierfunktion in die Federspeicherbremse integriert werden.
- Ebenfalls möglich ist, dass die Federspeicherbremsfunktion eine **"automatische Parkventil-Betätigungsfunktion"** ist. Mittels der automatischen Parkventil-Betätigungsfunktion sollen funktionelle Einbußen oder auch Gefahrensituationen vermieden werden, welche dadurch entstehen, dass der Fahrer vergisst, in einer Parksituation ein Parkventil zu betätigen. Mittels der automatischen Parkventil-Betätigungsfunktion erfolgt eine automatische Überführung eines Parkventils der Feststellbrems-Ventileinrichtung in eine Parkstellung, insbesondere wenn ein Druck in einer Vorratsleitung abfällt, was beispielsweise der Fall sein kann, wenn ein Abkoppeln des Anhängers von dem Zugfahrzeug erfolgt, oder erkannt wird, dass der Fahrer die Fahrerkabine verlässt u. ä.
- Für einen weiteren Vorschlag der Erfindung ist die Federspeicherbremsfunktion eine **"benutzergesteuerte Federspeicherbremsfunktion",** bei welcher der Fahrer dosiert in einer beliebigen Zahl von Stufen oder stufenlos die Federspeicherbremse betätigen kann, um beispielsweise unabhängig von einer Betätigung eines Bremspedals und von der Betriebsbremse eine dosierte Bremswirkung über die Federspeicherbremse herbeizuführen.
- Möglich ist auch, dass die Federspeicherbremsfunktion eine **"Streckbremsfunktion"** ist. Mit der Streckbremsfunktion kann der Nutzfahrzeugzug in einen gestreckten Zustand überführt werden, um eine Querstellung des Anhängers gegenüber dem Zugfahrzeug und/oder der Fahrtrichtung und/oder eine sogenannte Klappmesserbewegung zu vermeiden. Die Streckbremsfunktion wird insbesondere dadurch herbeigeführt, dass die Federspeicherbremse oder Betriebsbremse des Anhängers stärker betätigt wird als die Betriebsbremse des Zugfahrzeugs, was im einfachsten Fall durch dosierte Betätigung der Betriebsbremse oder Federspeicherbremse des Anhängers erfolgt. Somit setzt die Gewährleistung einer Streckbremsfunktion eine Betätigung der Bremsen, hier vorzugsweise der Federspeicherbremsen des Anhängers unabhängig von dem Zugfahrzeug voraus.

Möglich ist, dass eine beliebige Zahl der zuvor genannten Federspeicherbremsfunktionen (also lediglich eine beliebige der Federspeicherbremsfunktionen, zwei beliebige der Federspeicherbremsfunktionen oder auch mehr beliebige der Federspeicherbremsfunktionen) in der erfindungsgemäßen Anhänger-Bremssteuereinheit realisiert sind. Darüber hinaus kann in eine Federspeicherbremsfunktion eine andere Federspeicherbremsfunktion integriert sein. So kann beispielsweise in die Notbremsfunktion eine geregelte Federspeicherbremsfunktion integriert sein, sodass eine Notbremsung über die Federspeicherbremsen erfolgen, bei welcher ein Blockieren der Fahrzeugräder verhindert oder reduziert ist.

Möglich ist, dass die Federspeicherbremsfunktion(en) pneumatisch, elektropneumatisch oder elektronisch gesteuert oder geregelt wird/werden. Möglich ist des Weiteren im Rahmen der Erfindung, dass für die elektronische Ansteuerung der Modulator-Ventileinrichtung einerseits und eine elektronische Ansteuerung der Federspeicherbrems-Ventileinrichtung zur Gewährleistung der Federspeicherbremsfunktion(en) zwei separate elektronische Steuereinheiten in der Anhänger-Bremssteuereinheit vorhanden sind. Für einen weiteren Vorschlag der Erfindung ist eine elektronische Steuereinheit vorhanden, die Steuerlogik aufweist. Die Steuerlogik erzeugt sowohl ein Steuersignal für die Modulator-Ventileinrichtung zur Durchführung einer modulierten Bremsung über die Betriebsbremsen als auch (in anderen Betriebssituationen) ein Steuersignal für die Federspeicherbrems-Ventileinrichtung zur Durchführung mindestens einer Federspeicherbremsfunktion. Somit ist die Steuereinheit für diese Ausgestaltung der Erfindung multifunktional genutzt.

Grundsätzlich möglich ist, dass in die Baueinheit der Anhänger-Bremssteuereinheit ausschließlich die Modulator-Ventileinrichtung und die Federspeicherbrems-Ventileinrichtung integriert sind. Ebenfalls möglich ist, dass beliebige andere elektrische, pneumatische oder elektropneumatische Komponenten und Teil-Baueinheiten in Baueinheit der Anhänger-Bremssteuereinheit integriert sind. Für einen besonderen Vorschlag der Erfindung ist in der Baueinheit auch ein Rückschlagventil angeordnet, welches einen Druck, der an einem Behälteranschluss anliegt (also einen Druck eines mit dem Behälteranschluss verbundenen Behälters), gegenüber einem Druckabfall in einer Vorratsleitung und einem Vorratsleitungs-Anschluss sichert. Der Einsatz eines derartigen Rückschlagventils ist auch für den eingangs genannten Stand der Technik bekannt. In diesem Fall erfolgt die Befüllung des Behälters des Anhängers von dem Kupplungskopf Vorrat über das Rückschlagventil. Kommt es dann zu einem Abkuppeln des Anhängers oder einem Abriss der Vorratsleitung, verhindert das Rückschlagventil die unerwünschte Entlüftung des Behälteranschlusses über den entkoppelten Kupplungskopf Vorrat oder die defekte Vorratsleitung. Während gemäß dem eingangs genannten Stand der Technik das Rückschlagventil in das Parkventil, das Löseventil oder das Anhängerbremsventil integriert ist, ist dieses erfindungsgemäß zum ersten Mal in die Anhänger-Bremssteuereinheit integriert. Im einfachsten Fall kann dies sogar dazu führen, dass ein Vorratsleitungs-Anschluss der Anhänger-Bremssteuereinheit ausschließlich und direkt über eine pneumatische Leitung (ohne Zwischenschaltung weiterer pneumatischer Bauelemente) mit einem Kupplungskopf Vorrat verbunden werden kann.

Die Erfindung schlägt in weiterer Ausgestaltung vor, dass in der Baueinheit das Anti-Compound-Ventil angeordnet ist, so dass mittels der Anhänger-Bremssteuereinheit auch die unterschiedlichen Leitungszweige einerseits für die Erzeugung des Betriebsbremsdrucks und andererseits des Federspeicherbremsdrucks zusammengeführt werden, womit dann auch erfindungsgemäß vermieden wird, dass zwei zu einem extern angeordneten Anti-Compound-Ventil führende Leitungen mit zugeordneten Anschlüssen aus dem Gehäuse der Baueinheit herausgeführt werden.

Möglich ist auch, dass in der Baueinheit der Anhänger-Bremssteuereinheit ein Schnellentlüftungsventil angeordnet ist. Hierbei können das Anti-Compound-Ventil und/oder das Schnellentlüftungsventil unmittelbar einem Federspeicherbremse-Ausgangsanschluss der Anhänger-Bremssteuereinheit vorgeordnet sein.

Ein weiterer Vorschlag der Erfindung widmet sich der weiteren konstruktiven Ausgestaltung der Anhänger-Bremssteuereinheit. Vorgeschlagen wird, dass die Anhänger-Bremssteuereinheit einen Bremssteuerleitungs-Eingangsanschluss, einen Vorratsleitungs-Eingangsanschluss und einen Betriebsbremsleitungs-Ausgangsanschluss aufweist. Des Weiteren ist eine elektronische Steuereinheit vorhanden. Die Steuereinheit weist Steuerlogik auf, mittels welcher ein Steuersignal erzeugt wird. Mit dem Steuersignal kann die Modulator-Ventileinrichtung so angesteuert werden, dass diese einen Druck an dem Betriebsbremsleitungs-Ausgangsanschluss erzeugt, der von dem Druck an dem Bremssteuerleitungs-Eingangsanschluss abhängig ist und in ausgewählten Betriebssituationen moduliert ist. Möglich ist auch, dass das Steuersignal zur Ansteuerung der Federspeicherbrems-Ventileinrichtung derart dient, dass die Federspeicherbrems-Ventileinrichtung eine Federspeicherbrems-Funktion ausführt. Möglich ist auch, dass die Steuerlogik der Steuereinheit Steuersignale erzeugt, mittels welchen dann sowohl die Modulator-Ventileinrichtung als auch die Federspeicherbrems-Ventileinrichtung angesteuert wird. In diesem Fall ist die elektronische Steuereinheit multifunktional genutzt. Für diesen Vorschlag der Erfindung entlüftet die Federspeicherbrems-Ventileinrichtung bei einem Abfall des Drucks an dem Vorratsleitungs-Eingangsanschluss den Federspeicherbremse-Ausgangsanschluss. Dieses kann infolge einer pneumatischen Umschaltung von Ventilen der Federspeicherbrems-Ventileinrichtung und/oder infolge einer Ansteuerung der Federspeicherbrems-Ventileinrichtung durch die Steuerlogik der elektronischen Steuereinheit erfolgen.

Möglich ist, dass die Anhänger-Bremssteuereinheit Einsatz findet in einer Anhänger-Bremsanlage ohne Handbremsventil. Möglich ist auch, dass ein elektrischer Handbremsschalter in der Anhänger-Bremsanlage vorhanden ist, dessen durch die Betätigung durch den Benutzer ausgelöstes Signal zur Herbeiführung einer Handbremsfunktion an eine Steuereinheit der Anhänger-Bremssteuereinheit übertragen wird. Für einen besonderen Vorschlag der Erfindung kommuniziert die Anhänger-Bremssteuereinheit mit einem extern von dieser angeordneten Handbremsventil über pneumatische (Steuer-)Leitungen. Zu diesem Zweck verfügt die Anhänger-Bremssteuereinheit über einen Handbremsventil-Ausgangsanschluss, an welchem ein Versorgungsdruck für ein Handbremsventil bereitgestellt wird und über den somit das Handbremsventil mit Druckluft versorgt wird. Darüber hinaus verfügt die Anhänger-Bremssteuereinheit über einen Handbremsventil-Eingangsanschluss. Über den Handbremsventil-Eingangsanschluss kann dann (je nach Stellung des Handbremsventils) eine Belüftung oder Entlüftung des Federspeicherbremse-Ausgangsanschlusses herbeigeführt werden.

Für einen weiteren Vorschlag der Erfindung verfügt die Anhänger-Bremssteuereinheit und insbesondere die Federspeicherbrems-Ventileinrichtung derselben über zwei parallele Leitungszweige: Der Vorratsleitungs-Eingangsanschluss ist in diesem Fall über einen Belüftungs-Leitungszweig und einen parallel zu diesem angeordneten Entlüftungs-Leitungszweig mit dem Federspeicherbremse-Ausgangsanschluss (unter Umständen unter Zwischenschaltung weiterer Bauelemente) verbunden. Hierbei umfasst die Erfindung Ausführungsformen, bei welchen unmittelbar über den Belüftungs-Leitungszweig [bzw. den Entlüftung-Leitungszweig] eine Belüftung [bzw. Entlüftung] des Federspeicherbremse-Ausgangsanschlusses erfolgt, sowie Ausführungsformen, bei welchen über den Belüftungs-Leitungszweig [bzw. den Entlüftung-Leitungszweig] eine Belüftung [bzw. Entlüftung] des Federspeicherbremse-Ausgangsanschlusses gesteuert oder geregelt wird.

In dem Belüftungs-Leitungszweig ist ein in Richtung des Federspeicherbremse-Ausgangsanschluss öffnendes Rückschlagventil angeordnet. Über dieses Rückschlagventil ist in einer Öffnungsstellung des Rückschlagventils eine Belüftung des Federspeicherbremse-Ausgangsanschlusses und/oder eine Versorgung eines Behälteranschlusses herbeiführbar. Andererseits kann das Rückschlagventil in einer Schließstellung ein Entweichen von Druckluft aus dem Belüftungs-Leitungszweig über den Vorratsleitungs-Eingangsanschluss unterbinden und beispielsweise den Druck in einem an dem Behälteranschluss angeschlossenen Behälter sichern. In dem Entlüftungs-Leitungszweig ist ein Rückschlagventil angeordnet, welches sich in Richtung des Vorratsleitungs-Eingangsanschlusses öffnet und somit eine umgekehrte Wirkrichtung wie das in dem Belüftungs-Leitungszweig angeordnete Rückschlagventil hat. In einer Öffnungsstellung des Rückschlagventils des Entlüftungs-Leitungszweigs kann in einer Notbremssituation eine Entlüftung des Federspeicherbremse-Ausgangsanschlusses herbeigeführt werden. Dies kann unmittelbar erfolgen, indem Druckluft aus der Federspeicherkammer über das Rückschlagventil über den Vorratsleitungs-Eingangsanschluss entlüftet wird. Möglich ist aber, dass diese Entlüftung mittelbar erfolgt, indem über das Rückschlagventil und den Vorratsleitungs-Eingangsanschluss beispielsweise eine pneumatische Steuerleitung eines Schaltventils entlüftet wird, dessen dadurch verursachte Umschaltung dann zu einer Entlüftung des Federspeicherbremse-Ausgangsanschlusses führt.

Möglich ist hierbei, dass ein Behälteranschluss an der Anhänger-Bremssteuereinheit vorhanden ist, der über eine Verzweigung des Belüftungs-Leitungszweiges, welche stromabwärts des Rückschlagventils des Belüftungs-Leitungszweiges angeordnet ist, mit Druckluft versorgt wird. In diesem Fall kann der Belüftungs-Leitungszweig und/oder das Rückschlagventil multifunktional genutzt werden, da dieser einerseits für die Belüftung und/oder Drucksicherung der Federspeicherbremse und andererseits für das Befüllen und/oder die Drucksicherung eines an einem Behälteranschluss angeordneten Behälters genutzt werden können.

Für eine weitere Ausführungsform der Anhänger-Bremssteuereinheit weist der Belüftungs-Leitungszweig eine Ventileinrichtung auf oder führt zu einer Ventileinrichtung. Die Ventileinrichtung weist eine Entlüftungsstellung auf, in welcher eine Entlüftung des Federspeicherbremse-Ausgangsanschlusses erfolgt. Des Weiteren verfügt die Ventileinrichtung über eine Belüftungsstellung, in der der Federspeicherbremse-Ausgangsanschluss belüftet wird.

Eine Steuerung der Ventilstellung der Ventileinrichtung kann auf beliebige Weise erfolgen. So kann beispielsweise eine elektromagnetische Steuerung oder elektropneumatische Vorsteuerung der Ventileinrichtung erfolgen. Für einen Vorschlag der Erfindung erfolgt die Umschaltung der Ventileinrichtung in Abhängigkeit eines Drucks an einem Handbremsventil-Eingangsanschluss, so dass eine Umschaltung der Ventileinrichtung (und damit die Herbeiführung der Federspeicherbremswirkung) über eine manuelle Betätigung eines Handbremsventils durch den Benutzer möglich ist.

Möglich ist aber auch, dass die Umschaltung der Ventileinrichtung in Abhängigkeit von einem Druck in dem Belüftungs-Leitungszweig stromaufwärts der Ventileinrichtung als auch von einem Druck in dem Entlüftungs-Leitungszweig erfolgt.

Zu diesem Zweck kann Ventileinrichtung einen Steueranschluss aufweisen. In der Anhänger-Bremssteuereinheit ist in diesem Fall ein Wechselventil vorhanden. Ein Ausgangsanschluss des Wechselventils ist mit dem Steueranschluss der Ventileinrichtung verbunden. Hingegen ist ein erster Eingangsanschluss mit dem Belüftungs-Leitungszweig stromaufwärts der Ventileinrichtung verbunden. Einer zweiter Eingangsanschluss des Wechselventils ist mit dem Entlüftungs-Leitungszweig verbunden. Mittels eines Einsatzes eines Wechselventils kann somit auf einfache Weise die Umschaltung der Ventileinrichtung sowohl von dem Druck in dem Belüftungs-Leitungszweig als auch in dem Entlüftungs-Leitungszweig abhängig gemacht werden.

Soll eine Entlüftung des Federspeicherbremse-Ausgangsanschlusses über den Entlüftungs-Leitungszweig und den Vorratsleitungs-Eingangsanschluss erfolgen, kann unter Umständen die Geschwindigkeit der Entlüftung dadurch reduziert sein, dass sich infolge der Leitungslänge des Endlüftungs-Leitungszweigs, einer Drosselwirkung des Vorratsleitungs-Eingangsanschlusses und außerhalb der Anhänger-Bremssteuereinheit angeordnete Leitungsteile der Vorratsleitung eine unterwünschte Drosselung des entlüftenden Stroms der Druckluft ergibt. Insbesondere vor diesem Hintergrund kann in dem Entlüftungs-Leitungszweig eine Drossel angeordnet werden. In diesem Fall ist der Federspeicherbremse-Ausgangsanschluss über die Drossel mit dem zweiten Eingangsanschluss des Wechselventils verbunden. In diesem Fall erfolgt zu Beginn der Entlüftung ein lediglich gedrosselter Durchtritt von Druckluft aus der Federspeicherbremse durch die Drossel zu der Entlüftung. Hingegen wird der Leitungsabschnitt des Entlüftungs-Leitungszweigs zwischen der Drossel und dem Vorratsleitungs-Eingangsanschluss verhältnismäßig schnell entlüftet, womit dann auch der zweite Eingangsanschluss des Wechselventils schnell entlüftet wird und eine schnelle Umschaltung der Ventileinrichtung herbeigeführt werden kann. Mit dieser Umschaltung kann dann mit einem verkürzten Leitungsweg und ohne Drosselung die Entlüftung der Federspeicherbremse über die Ventileinrichtung erfolgen.

Für einen weiteren Vorschlag der Erfindung ist der erste Eingangsanschluss des Wechselventils nicht unmittelbar mit dem Belüftungs-Leitungszweig verbunden. Vielmehr kann in einer derartige Verbindung ein Magnetventil integriert sein, wobei dieses Magnetventil dann eine Belüftungsstellung und/oder eine Entlüftungsstellung und/oder eine Sperrstellung aufweist. Durch Umschaltung des Magnetventils, beispielsweise durch eine Steuereinheit, welche auch für die Steuerung der Modulator-Ventileinrichtung zuständig ist, in die Entlüftungsstellung oder Belüftungsstellung kann dann gezielt eine Umschaltung der Ventileinrichtung erfolgen, womit dann auch gezielt eine pneumatische Beaufschlagung der Federspeicherbremse gesteuert werden kann.

Für die Verbindung des Entlüftungs-Leitungszweigs mit der zugeordneten Entlüftung gibt es im Rahmen der Erfindung vielfältige Möglichkeiten. Möglich ist, dass in dem Entlüftungs-Leitungszweig ein Entlüftungsventil angeordnet ist, bei dem es sich um ein Magnetventil handeln kann, ein in die Anhänger-Bremssteuereinheit integriertes Handbetätigungsventil handeln kann oder um ein pneumatisch gesteuertes Ventil handeln kann, welches über ein externes handbetätigtes Ventil umgeschaltet werden kann. Möglich ist aber auch, dass der Entlüftungs-Leitungszweig einen Entlüftungsanschluss der Anhänger-Bremssteuereinheit aufweist, welcher dann außerhalb der Anhänger-Bremssteuereinheit mit einer Entlüftung verbunden ist. Hierbei kann es sich beispielsweise um ein externes handbetätigtes Entlüftungsventil handeln. Möglich ist aber durchaus auch, dass als Entlüftung des Entlüftungs-Leitungszweigs ein nicht mit einem entsprechenden Kupplungskopf des Zugfahrzeugs gekoppelter Kupplungskopf Vorrat genutzt wird oder eine defekte, außerhalb der Anhänger-Bremssteuereinheit angeordnete Vorratsleitung des Anhängers.

Möglich ist auch, dass zwischen dem Ausgangsanschluss des Wechselventils und dem Steueranschluss der Ventileinrichtung ein Magnetventil angeordnet ist. Dieses Magnetventil weist eine Entlüftungsstellung auf, in welcher der Steueranschluss der Ventileinrichtung entlüftet ist, womit dieses beispielsweise auch eine Entlüftungsstellung einnehmen kann. Nimmt hingegen das Magnetventil eine Durchlassstellung ein, wird dem Steueranschluss der Ventileinrichtung der Druck an dem Ausgangsanschluss des Wechselventils zugeführt, womit dann eine Umschaltung der Ventileinrichtung je nach dem Druck in dem Belüftungs-Leitungszweig und dem Entlüftungs-Leitungszweig über das Wechselventil gesteuert wird. Auf diese Weise kann beispielsweise eine Overridefunktion, wie diese zuvor erläutert worden ist, realisiert werden.

In weiterer Ausgestaltung schlägt die Erfindung vor, dass das Rückschlagventil, welches in dem Entlüftungs-Leitungszweig angeordnet ist, über ein Ventil umgangen werden kann. Die Ventilstellung dieses Ventils ist dann von dem Druck an dem Federspeicherbremse-Ausgangsanschluss abhängig.

Möglich ist hierbei, dass die Ventilstellung ausschließlich von dem Druck an dem Federspeicherbremse-Ausgangsanschluss abhängig ist. Für einen weiteren Vorschlag der Erfindung ist die Ventilstellung des Ventils, über welches das Rückschlagventil in dem Entlüftungs-Leitungszweig umgangen werden kann, neben der Abhängigkeit von dem Druck an dem Federspeicherbremse-Ausgangsanschluss auch abhängig von dem Druck an dem Bremssteuerleitungs-Eingangsanschluss.

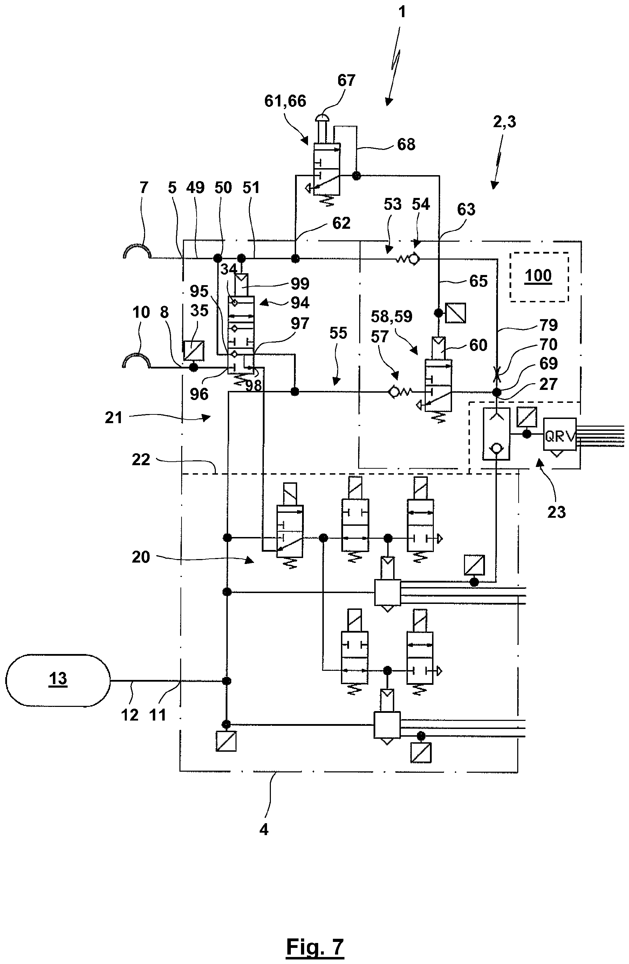

In weiterer konstruktiver Ausgestaltung der Erfindung ist in der Anhänger-Bremssteuereinheit ein pneumatisch gesteuertes Ventil vorhanden, welches insbesondere als 4/3-Wegeventil ausgebildet ist. Ein erster Anschluss dieses Ventils ist mit dem Vorratsleitungs-Eingangsanschluss verbunden. Ein zweiter Anschluss des Ventils ist mit dem Bremssteuerleitungs-Eingangsanschluss verbunden. Über einen dritten Anschluss des Ventils verläuft der Belüftungs-Leitungszweig. Schließlich ist ein vierter Anschluss des Ventils mit der Modulator-Ventileinrichtung verbunden. In sämtlichen Betriebsstellungen verbindet das Ventil den ersten Anschluss über das in das Ventil integrierte Rückschlagventil des Belüftungs-Leitungszweigs mit dem dritten Anschluss. In einer ersten Ventilstellung verbindet das Ventil den zweiten Anschluss mit dem vierten Anschluss. Hingegen sperrt in einer zweiten Ventilstellung das Ventil den zweiten Anschluss gegenüber dem vierten Anschluss ab. In einer dritten Ventilstellung sperrt das Ventil den zweiten Anschluss ab, während dieses den vierten Anschluss über das Rückschlagventil des Belüftungs-Leitungszweigs mit dem ersten Anschluss verbindet. Das Ventil weist einen pneumatischen Steueranschluss auf, welcher mit dem Vorratsleitungs-Eingangsanschluss verbunden ist. Ein derartiges Ventil wird seitens der Anmelderin auch für andere Ausführungsformen vertrieben, so dass dieses sowohl für die erfindungsgemäße Anhänger-Bremssteuereinheit als auch für andere Produkte eingesetzt werden kann. Hierbei kann es sich um Teile der unter den Kennzeichnungen TEM, TrCM, TrCM+ (mit der Funktion "Safe Parking") seitens der Anmelderin vertriebenen Produkte handeln, die in die Anhänger-Bremssteuereinheit eingegliedert werden sollen. Hierbei entfällt das Löseventil und/oder das Parkbremsventil entweder ganz oder dieses wird als separates Ventil (vgl. Fig. 7) ausgebildet und an anderer Stelle in dem Fahrzeug platziert.

Eine weitere Lösung der der Erfindung zugrunde liegenden Aufgabe ist gegeben durch eine Anhänger-Bremsanlage, in welcher eine Anhänger-Bremssteuereinheit Einsatz findet, wie diese zuvor erläutert worden ist.

Hierbei kann grundsätzlich eine beliebige Integration der Anhänger-Bremssteuereinheit in die Anhänger-Bremsanlage erfolgen. Für einen Vorschlag der Erfindung ist in der Anhänger-Bremsanlage ein Kupplungskopf Vorrat vorhanden. Der Kupplungskopf Vorrat ist über eine Vorratsleitung mit dem Vorratsleitungs-Eingangsanschluss der Anhänger-Bremssteuereinheit verbunden. Hierbei handelt es sich vorzugsweise um eine direkte Verbindung, also eine reine Leitungsverbindung ohne weitere darin angeordnete pneumatische Bauelemente. Vorzugsweise ist in der Vorratsleitung kein Rückschlagventil, kein Löseventil, kein Anhängerbremsventil und/oder kein Parkventil angeordnet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Federspeicherbremse oder einem Ventil die Rede ist, ist dies so zu verstehen, dass genau eine Federspeicherbremse oder ein Ventil, zwei Federspeicherbremsen oder zwei Ventile oder mehr Federspeicherbremsen oder mehr Ventile vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

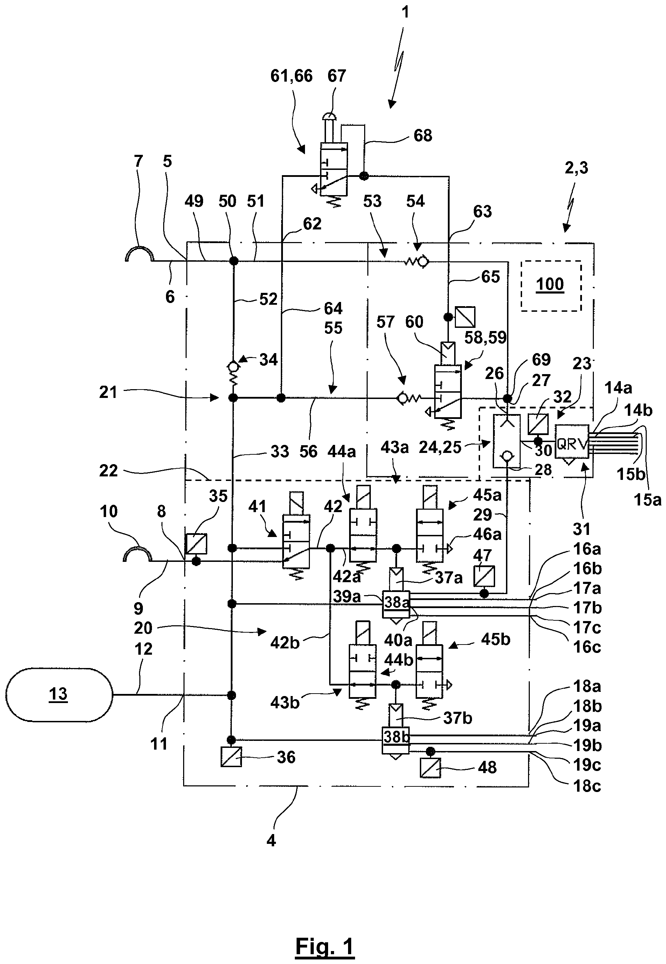

- **Fig. 1 bis 7**: zeigen schematisch unterschiedliche Ausführungsformen einer Anhänger-Bremsanlage mit einer elektronisch gesteuerten Anhänger-Bremssteuereinheit.

### FIGURENBESCHREIBUNG

Sind in den Figuren Bauelemente oder mit mehreren Bauelementen gebildete Teil-Baueinheiten gleich oder entsprechend ausgebildet und/oder mit gleichen oder entsprechenden Funktionen ausgestattet, so wird für diese teilweise auch dasselbe Bezugszeichen verwendet, wobei diese dann durch die ergänzenden Buchstaben a, b, ... unterschieden werden und auf diese auch teilweise ohne Hinzufügung des ergänzenden Buchstabens Bezug genommen wird.

**Fig. 1** zeigt eine Anhänger-Bremsanlage 1 für einen Anhänger eines Nutzfahrzeugs. Die Anhänger-Bremsanlage 1 weist eine elektronisch gesteuerte Anhänger-Bremssteuereinheit 2 auf. Die Anhänger-Bremssteuereinheit 2 ist als Baueinheit 3 ausgebildet und verfügt über ein Gehäuse 4. Das Gehäuse 4 ist ein- oder mehrteilig oder modular ausgebildet.

Die Anhänger-Bremssteuereinheit 2 kommuniziert mit weiteren pneumatischen Bauelementen der Anhänger-Bremsanlage 1 wie folgt:
- Ein Vorratsleitungs-Eingangsanschluss 5 ist über eine Vorratsleitung 6 mit einem Kupplungskopf Vorrat 7 verbunden.
- Ein Bremssteuerleitungs-Eingangsanschluss 8 ist über eine Bremssteuerleitung 9 mit einem Kupplungskopf Bremse 10 verbunden.
- Ein Behälteranschluss 11 ist über eine Behälterleitung 12 mit einem Behälter 13 des Anhängers verbunden.
- Ein Federspeicherbremse-Ausgangsanschluss 14 ist über eine Federspeicherbremsleitung 15 mit einer hier nicht dargestellten Federspeicherkammer eines Federspeicherbremszylinders verbunden.
- Ein Betriebsbremsleitungs-Ausgangsanschluss 16 ist über eine Betriebsbremsleitung 17 mit einer hier nicht dargestellten Betriebsbremskammer einer Betriebsbremse verbunden.

Vorzugsweise werden die Federspeicherbremse und die Betriebsbremse von einem Kombi-Bremszylinder ausgebildet.

Während durchaus möglich ist, dass lediglich ein Betriebsbremsleitungs-Ausgangsanschluss 16 und/oder lediglich ein Federspeicherbremse-Ausgangsanschluss 14 an der Anhänger-Bremssteuereinheit 2 vorhanden ist und eine Verzweigung zu mehreren Federspeicherbremsen und/oder Betriebsbremsen außerhalb der Anhänger-Bremssteuereinheit 2 erfolgt, verfügt die Anhänger-Bremssteuereinheit 2 für die dargestellten Ausführungsbeispiele über mehrere Federspeicherbremse-Ausgangsanschlüsse 14a, 14b, ... und/oder Betriebsbremsleitungs-Ausgangsanschlüsse 16a, 16b, ..., welche dann ohne Verzweigung über jeweils zugeordnete Federspeicherbremsleitungen 15a, 15b, ... und/oder Betriebsbremsleitungen 17a, 17b, ... mit zugeordneten Federspeicherbremsen und/oder Betriebsbremsen verbunden sind. Durchaus möglich ist, dass die Anhänger-Bremsanlage 1 einkreisig ausgebildet ist, so dass insbesondere ein einziger, später verzweigender Betriebsbremsleitungs-Ausgangsanschluss 16 Einsatz findet oder mehrere Betriebsbremsleitungs-Ausgangsanschlüsse 16a, 16b, ...Einsatz finden, die mit denselben Betriebsbremsdrücken beaufschlagt werden. Für die dargestellten Ausführungsbeispiele ist allerdings die Anhänger-Bremsanlage 1 zweikreisig ausgebildet. In diesem Fall verfügt die Anhänger-Bremssteuereinheit 2 über
- einen ersten Betriebsbremskreis mit Betriebsbremsleitungs-Ausgangsanschlüsse 16a, 16b, ... mit zugeordneten Betriebsbremsleitungen 17a, 17b, ... und Betriebsbremsen dieses ersten Betriebsbremskreises, die mit demselben Betriebsbremsdruck des ersten Betriebsbremskreises beaufschlagt werden, sowie
- einen zweiten Betriebsbremskreis mit Betriebsbremsleitungs-Ausgangsanschlüsse 18a, 18b, ... mit zugeordneten Betriebsbremsleitungen 19a, 19b, ... sowie zugeordneten Betriebsbremsen dieses zweiten Betriebsbremskreises, die dann mit einem von dem Druck in dem ersten Kreis abweichenden Betriebsbremsdruck des zweiten Betriebsbremskreises beaufschlagt werden.

Die Anhänger-Bremssteuereinheit 2 verfügt über eine in diese integrierte oder angeflanschte Steuereinheit 100. Diese dient der Ansteuerung der in der Anhänger-Bremssteuereinheit 2 eingesetzten Magnetventile. Eine derartige Steuereinheit 100 kann über einen separaten elektrischen Anschluss oder einen Anschluss für ein Bussystem mit außerhalb der Anhänger-Bremssteuereinheit 2 angeordneten Sensoren, Schaltern, Betätigungselementen oder anderen Steuereinheiten des Anhängers (oder über eine geeignete Schnittstelle zwischen Anhänger und Zugfahrzeug) des Zugfahrzeugs verbunden sein und über diese Verbindung übertragene Signale verarbeiten und diese Signale für die Steuerung der Magnetventile berücksichtigen.

Die Anhänger-Bremssteuereinheit 2 verfügt über eine elektronisch von der Steuereinheit gesteuerte Modulator-Ventileinrichtung 20 sowie eine Federspeicherbrems-Ventileinrichtung 21. In Fig. 1 sind die einerseits der Modulator-Ventileinrichtung 20 und andererseits der Federspeicherbrems-Ventileinrichtung 21 zugeordneten pneumatischen Bauelemente durch eine gestrichelte Trennlinie 22 voneinander getrennt. Eine derartige Trennlinie 22 existiert unter Umständen lediglich für die schematische Darstellung als imaginäre Trennlinie, während in einer konstruktiven Ausgestaltung der Anhänger-Bremssteuereinheit 2 die jeweiligen pneumatischen Bauelemente der Modulator-Ventileinrichtung 20 und der Federspeicherbrems-Ventileinrichtung 21 beliebig räumlich verteilt sein können, sofern die hier dargestellten Leitungsverbindungen zwischen den genannten pneumatischen Bauelementen vorhanden sind.

Die Modulator-Ventileinrichtung 20 weist vorzugsweise die in bekannten EBS-Steuereinheiten eingesetzten pneumatischen Bauelemente auf. Die Modulator-Ventileinrichtung 20 erzeugt aus dem an dem Bremssteuerleitungs-Eingangsanschluss 8 anliegenden Bremssteuerdruck den an den Betriebsbremsleitungs-Ausgangsanschlüssen 16, 18 anliegenden Betriebsbremsdruck, hier für zwei unterschiedliche Kreise. Hierbei ist der ausgesteuerte Betriebsbremsdruck an den Betriebsbremsleitungs-Ausgangsanschlüssen 16, 18 proportional zu dem an dem Bremssteuerleitungs-Eingangsanschluss 8 anliegenden Druck oder hängt von diesem entsprechend einer vorgegebenen Abhängigkeit ab. Darüber hinaus erfolgt eine Regelung oder Modulation des an dem Betriebsbremsleitungs-Ausgangsanschluss 16, 18 anliegenden Betriebsbremsdrucks zur Verringerung eines Schlupfes der den Betriebsbremsen zugeordneten Fahrzeugräder und/oder zur Verhinderung eines Blockierens der Fahrzeugräder. Hierzu berücksichtigt die Steuereinheit 100, mittels welcher eine elektrische Ansteuerung der Modulator-Ventileinrichtung 20 und die Regelung des Betriebsbremsdrucks erfolgt, vorzugsweise das Signal eines Rad-Drehzahlsensors.

Die Federspeicherbrems-Ventileinrichtung 21 dient der Bereitstellung eines Federspeicherbremsdrucks, welcher über die Federspeicherbremse-Ausgangsanschlüsse 14a, 14b, ... den Federspeicherbremsen zugeführt wird. Die Federspeicherbrems-Ventileinrichtung 21 verfügt hierbei über die erforderlichen pneumatischen Bauelemente wie Ventile. Beispielsweise kann grundsätzlich die Federspeicherbrems-Ventileinrichtung 21 Ventile aufweisen, welche entsprechend einem aus dem Stand der Technik (beispielsweise dem eingangs genannten Stand der Technik) bekannten Parkventil, Löseventil und/oder Notbremsventil oder Anhängerbremsventil ausgebildet sind.

Während grundsätzlich möglich ist, das der Ausgangsdruck der Federspeicherbrems-Ventileinrichtung 21 unmittelbar den Federspeicherbremsen zugeführt wird, ist für die hier dargestellten Ausführungsbeispiele der Ausgangsdruck der Modulator-Ventileinrichtung 20 über eine Federspeicher-Verarbeitungseinrichtung 23 mit den Federspeicherbremsen verbunden. Die Federspeicher-Verarbeitungseinrichtung 23 verfügt über ein Anti-Compound-Ventil 24, welches als Wechselventil 25 ausgebildet ist. Ein erster Eingangsanschluss 26 des Wechselventils 25 ist mit einer Ausgangsleitung 27 der Federspeicherbrems-Ventileinrichtung 21 verbunden. Ein zweiter Eingangsschluss 28 des Wechselventils 25 ist mit einer Betriebsbremsleitung 29 verbunden. Die Betriebsbremsleitung 29 wird mit dem von der Modulator-Ventileinrichtung 20, hier für einen der beiden Kreise, ausgesteuerten Betriebsbremsdruck, der dem Druck an den Betriebsbremsleitungs-Ausgangsanschlüssen 16 entspricht, beaufschlagt. Ein Ausgangsanschluss 30 des Wechselventils 25 ist mit den Federspeicherbremse-Ausgangsanschlüssen 14 verbunden. Während eine derartige Verbindung auch unmittelbar erfolgen kann, erfolgt für das dargestellte Ausführungsbeispiel diese Verbindung über ein Schnellentlüftungsventil 31, wobei auch wie dargestellt in die Federspeicher-Verarbeitungseinrichtung 23 ein Sensor 32 integriert sein kann, über welchen der Federspeicherbremsdruck erfasst wird, der dann der Steuereinheit 100 der Anhänger-Bremssteuereinheit 2 zugeführt werden kann.

Für das dargestellte Ausführungsbeispiel verfügt die in Fig. 1 gestrichelt abgegrenzte Federspeicherbrems-Ventileinrichtung 21 somit über das Anti-Compound-Ventil 24, das Schnellentlüftungsventil 31 und den Sensor 32, wobei die Federspeicher-Verarbeitungseinrichtung 23 auch wie dargestellt die Federspeicherbremse-Ausgangsanschlüsse 14 ausbilden kann.

Die Modulator-Ventileinrichtung 20 und die Federspeicherbrems-Ventileinrichtung 21 sind ausgangsseitig über das Anti-Compound-Ventil 24 miteinander verbunden. Darüber hinaus sind diese über eine Vorratsleitung 33 miteinander verbunden. Die Vorratsleitung 33 ist einerseits (hier durch die Federspeicherbrems-Ventileinrichtung 21 mit einem drucksichernden Rückschlagventil 34) mit dem Vorratsleitungs-Eingangsanschluss 5 verbunden sowie andererseits mit dem Behälteranschluss 11 verbunden. Über die Vorratsleitung 33 kann somit eine Befüllung des Behälters 13 über an dem Vorratsleitungs-Eingangsanschluss 5 anstehende Druckluft erfolgen. Es ist aber durchaus möglich, dass die Vorratsleitung 33 und Rückschlagventil 34 nicht Bestandteil der Modulator-Ventileinrichtung 20 und der Federspeicherbrems-Ventileinrichtung 21 sind, so dass diese außerhalb derselben an der Modulator-Ventileinrichtung 20 und der Federspeicherbrems-Ventileinrichtung 21 vorbeigeführt sind, was innerhalb der Anhänger-Bremssteuereinheit 2 oder auch außerhalb derselben erfolgen kann. Möglich ist auch, dass die Vorratsleitung 6 außerhalb der Anhänger-Bremssteuereinheit 2 verzweigt, wobei dann die Leitungszweige über separate Anschlüsse der Anhänger-Bremssteuereinheit 2 die Modulator-Ventileinrichtung 20 oder die Federspeicherbrems-Ventileinrichtung 21 mit Druckluft versorgen und/oder den Behälter 13 mit Druckluft versorgen.

Die Modulator-Ventileinrichtung 20 weist optional einen Sensor 35 auf, über welchen der Druck an dem Bremssteuerleitungs-Eingangsanschluss 8 erfasst wird, und/oder einen Sensor 36 auf, über welchen der Druck an dem Behälteranschluss 11 erfasst wird. Die Signale der Sensoren 35, 36 werden der Steuereinheit 100 der Anhänger-Bremssteuereinheit 2 zugeführt.

Der an dem Bremssteuerleitungs-Eingangsanschluss 8 anliegende Druck wird einem Steueranschluss 37 eines Relaisventils 38 zugeführt. Ein Eingang 39 des Relaisventils 38 ist mit der Vorratsleitung 33 und somit über den Behälteranschluss 11 mit dem Behälter 13 zur Druckluftversorgung verbunden. Ausgänge 40a, 40b, ... des Relaisventils 38 sind unmittelbar mit den Betriebsbremsleitungs-Ausgangsanschlüssen 16 sowie der zu dem Anti-Compound-Ventil 24 führenden Betriebsbremsleitung 29 verbunden. Mittels des Relaisventils 38 kann somit ohne ergänzende elektronische Regelung, wie diese im Folgenden noch beschrieben wird, eine Aussteuerung eines Betriebsbremsdrucks an den Betriebsbremsleitungs-Ausgangsanschlüssen 16 erfolgen, der proportional zu dem an dem Steueranschluss 37 anliegenden Druck, also proportional zu dem an dem Bremssteuerleitungs-Eingangsanschluss 8 anliegenden Druck ist.

Eingangsseitig verfügt die Modulator-Ventileinrichtung 20 über ein Magnetventil 41, welches eine Versorgungsleitung 42 der Modulator-Ventileinrichtung 20 in einer Ventilstellung (in Fig. 1 nicht wirksame Ventilstellung) mit der Vorratsleitung 33 und damit dem Behälteranschluss 11 und dem Behälter 13 verbindet und in einer anderen Ventilstellung (in Fig. 1 wirksame Ventilstellung) mit dem Bremssteuerleitungs-Eingangsanschluss 8 verbindet. Das Magnetventil 41 wird durch die elektronische Steuereinheit 100 der Anhänger-Bremssteuereinheit 2 angesteuert. Die Versorgungsleitung 42 ist über eine Magnetventileinrichtung 43 mit dem Steueranschluss 37 des Relaisventils 38 verbunden. Je nach elektrischer Ansteuerung der Magnetventileinrichtung 43 verbindet diese entweder die Versorgungsleitung 42 mit dem Steueranschluss 37 oder entlüftet diese den Steueranschluss 37. Die Magnetventileinrichtung 43 kann beispielsweise ein Magnetventil in Ausbildung als 3/2-Wegeventil aufweisen, welches in einer Belüftungsstellung den Steueranschluss 37 mit der Versorgungsleitung 42 verbindet und in einer Entlüftungsstellung die Versorgungsleitung 42 absperrt, aber den Steueranschluss 37 entlüftet. Für das hier dargestellte Ausführungsbeispiel ist die Magnetventileinrichtung 43 mit einem Magnetventil 44 ausgebildet, welches als Sperrventil ausgebildet ist und in der in Fig. 1 wirksamen Durchlassstellung den Steueranschluss 37 mit der Versorgungsleitung 42 verbindet und in der Sperrstellung den Steueranschluss 37 gegenüber der Versorgungsleitung 42 absperrt, und einem Magnetventil 45 gebildet, welches in einer Zweigleitung von der Verbindungsleitung zwischen dem Magnetventil 44 und dem Steueranschluss 37 angeordnet ist und in der in Fig. 1 wirksamen Schaltstellung eine Verbindung einer Entlüftung 46 mit dem Steueranschluss 37 absperrt sowie in der anderen Ventilstellung eine Verbindung zwischen der Entlüftung 46 und Steueranschluss 37 schafft.

Für die zweikreise Ausbildung der Modulator-Ventileinrichtung 20 verzweigt die Versorgungsleitung 42 in Versorgungsleitungen 42a, 42b, welche dann jeweils über entsprechend ausgebildete Magnetventileinrichtungen 43a, 43b (hier mit Magnetventilen 44a, 44b; 45a, 45b) mit Steueranschlüssen 37a, 37b der Relaisventile 38a, 38b verbunden sind, wobei dann das Relaisventil 38a zuständig ist für die Aussteuerung des Betriebsbremsdruckes eines Betriebsbremskreises für die Betriebsbremsleitungs-Ausgangsanschlüsse 16 sowie die Betriebsbremsleitung 29 und das Relaisventil 38b zuständig ist für die Aussteuerung des Betriebsbremsdruckes für die dem anderen Betriebsbremskreis zugeordneten Betriebsbremsleitungs-Ausgangsanschlüsse 18.

Möglich ist, dass eine Erfassung der von den Relaisventilen 38a, 38b ausgesteuerten Betriebsbremsdrucke der beiden Kreise über Sensoren 47, 48 erfolgt.

Die Modulator-Ventileinrichtung 20 ermöglicht insbesondere die folgenden Betriebsweisen:
Für einen normalen Fahrbetrieb mit vorhandener elektrischer Leistungsversorgung und elektronischer Steuerung der Betriebsbremsdrücke wird das Magnetventil 41 in die in Fig. 1 nicht wirksame Schaltstellung umgeschaltet, sodass dieses die Magnetventileinrichtungen 43a, 43b aus dem Vorratsbehälter 13 mit Druckluft versorgt. Es kann durch geeignete elektronische Ansteuerung der Steueranschlüsse der Magnetventileinrichtungen 43a, 43b die elektronische Steuerung der Betriebsbremsdrücke erfolgen. Kommt es zu einem erhöhten Schlupf oder einem Blockieren eines Fahrzeugrades, kann ein temporäres Lösen des Fahrzeugrades zur Wiederherstellung der Traktion in einem Betriebsbremskreis oder beiden Betriebsbremskreisen dadurch erfolgen, dass gleichzeitig die Magnetventile 44, 45 durch elektrische Bestromung derselben durch die elektronische Steuereinheit umgeschaltet werden in die in Fig. 1 nicht wirksamen Ventilstellungen. Dies führt zu einer Entlüftung des Steueranschlusses 37 des Relaisventils 38, womit der ausgesteuerte Betriebsbremsdruck reduziert wird. Wird dann die Wiederherstellung der Traktion, also eine Erhöhung der Drehzahl des Fahrzeugrades sensiert, kann wieder die Zurückschaltung der Magnetventile 44, 45 in die in Fig. 1 wirksamen Ventilstellungen erfolgen, womit der Steueranschluss 37 wieder mit dem Bremssteuerdruck beaufschlagt wird.

Für einen Einbruch der elektrischen Leitungsversorgung oder einen Defekt der elektronischen Steuerung kehrt das Magnetventil 41 infolge der Beaufschlagung durch die Feder in die in Fig. 1 wirksame Schaltstellung zurück und die Magnetventileinrichtungen 43a, 43b befinden sich infolge der auf diese wirkenden Federn in den in Fig. 1 wirksamen Ventilstellungen. Dies hat zur Folge, dass den Steueranschlüssen 37 der Relaisventile 38 der von dem Zugfahrzeug über den Kupplungskopf Bremse 10 zugeführte und an dem Bremssteuerleitungs-Eingangsanschluss 8 anliegende, beispielsweise über den Fahrer mittels des Bremspedals vorgegebene Bremssteuerdruck zugeführt wird, womit dann das Relaisventil 38 Betriebsbremsdrücke aussteuert, welche proportional zu dem Bremssteuerdruck sind.

Möglich ist auch, dass eine elektronische Ansteuerung der Magnetventile 44, 45 auch zu einem anderen Zweck als der Vermeidung eines Schlupfes eines Blockierens der Fahrzeugräder erfolgt. So kann über eine derartige elektronische Ansteuerung der Magnetventile 44, 45 eine Aussteuerung eines Betriebsbremsdruckes durch die Relaisventile herbeigeführt werden, welche temporär und in ausgewählten Betriebssituationen von der vorgegebenen Abhängigkeit von dem Bremssteuerdruck abweicht. Um hier lediglich ein nicht beschränkendes Beispiel zu nennen, kann möglich sein, dass das Zugfahrzeug abgebremst wird durch ein Einlegen eines kleineren Ganges und/oder einen Wechsel des Zugbetriebs in einen Schubbetrieb. Ein infolge der Massenträgheit des Antriebsstrangs des Zugfahrzeugs hervorgerufenes Schleppmoment führt zu einer Verzögerung des Zugfahrzeugs, ohne dass eine Betätigung der Betriebsbremsen und/oder eine Betätigung des Bremspedals durch den Fahrer erfolgt. Wird in einem derartigen Fall der Anhänger nicht abgebremst, führt dies zu einem Auflaufen des Anhängers auf das Zugfahrzeug, was zu einem erhöhten Verschleiß der Bremsen und Reifen des Zugfahrzeugs führen kann und schlimmstenfalls zu instabilen Fahrzuständen führen kann. Wird, beispielsweise auf Grundlage der Betätigung eines Gangwahlhebels durch den Fahrer oder einen Getriebesensor, erkannt, dass eine Abbremsung des Fahrzeugs infolge eines Schubbetriebs erfolgt, kann auch ohne anliegenden Bremssteuerdruck in derartigen Betriebssituationen eine Umschaltung der Magnetventile 41, 44, 45 erfolgen. In diesem Fall erfolgt eine Druckbeaufschlagung der Versorgungsleitung 42 aus dem Behälter 13, wobei dann die oszillierende oder konstante Druckhöhe an dem Steueranschluss 37 durch die Umschaltung der Magnetventile 44, 45 herbeigeführt werden kann. Ist ein gewünschter Druck an dem Steueranschluss 37 herbeigeführt und soll dieser konstant aufrecht erhalten werden, können auch die beiden Magnetventile 44, 45 gleichzeitig in ihre Sperrstellung überführt werden.

Eine Notbremssituation kann für vielfältige Betriebssituationen vorliegen und anhand unterschiedlicher Kriterien erkannt werden. So kann beispielsweise über ein elektronisches Fahrerassistenzsystem, eine Überwachung der Umgebung des Nutzfahrzeugzuges über Sensoren oder Kameras und entsprechende Auswertung erkannt werden, dass eine Notbremsung erforderlich ist. Möglich ist auch, dass eine Notbremssituation dann vorliegt, wenn ein Abriss des Kupplungskopfs Vorrat 7 von dem zugeordneten Kupplungskopf des Zugfahrzeugs erfolgt oder ein defekt in einer Vorratsleitung 6 auftritt, da hiermit die Druckluftversorgung der Anhänger-Bremsanlage 1 nicht mehr gewährleistet ist. Soll, zumindest für einige Betriebssituationen und für hinreichend mit Druckluft gefüllten Behälter 13 in einer derartigen Notbremssituation eine Notbremsung des Anhängers über die Betriebsbremsen erfolgen (was auch die Möglichkeit liefert, eine modulierte Notbremsung mit der Vermeidung eines Blockierens von Fahrzeugrädern durchzuführen und eine instabile Bewegung des Nutzfahrzeugzuges zu vermeiden), so wird das Magnetventil 41 aus der in Fig. 1 wirksamen Ventilstellung in die andere Ventilstellung umgeschaltet, so dass die Versorgungsleitung 42 über den Bremssteuerleitungs-Eingangsanschluss 8 aus dem Behälter 13 mit Druckluft versorgt wird. Je nach Ansteuerung der Magnetventileinrichtungen 43a, 43b kann dann eine gewünschte, unter Umständen auch modulierte Betriebsbremskraft für die beiden Betriebsbremskreise erzeugt werden.

In der Federspeicherbrems-Ventileinrichtung 21 verzweigt die von dem Vorratsleitungs-Eingangsanschluss 5 ausgehende Vorratsleitung 49 über eine Verzweigung 50 in Vorratsleitungszweige 51, 52. Der Vorratsleitungszweig 51 ist Teil eines Entlüftungs-Leitungszweigs 53, in dem der Vorratsleitungszweig 52 über ein in Richtung des Vorratsleitungs-Eingangsanschlusses 5 öffnendes Rückschlagventil 54 mit der Ausgangsleitung 27 verbunden ist.

Der Vorratsleitungszweig 52 ist Teil eines Belüftungs-Leitungszweigs 55 und in diesem über das Rückschlagventil 34 mit einer Versorgungsleitung 56, einem Rückschlagventil 57 und einer Ventileinrichtung 58 in dieser Reihenfolge mit der Ausgangsleitung 27 verbunden. Von der Versorgungsleitung 56 zweigt zwischen den Rückschlagventilen 34, 57 die Versorgungsleitung 33, über welche die Modulator-Ventileinrichtung 20 mit Druckluft versorgt wird, ab. Die Rückschlagventile 34, 57 ermöglichen einen Übertritt von Druckluft von dem Vorratsleitungs-Eingangsanschluss 5 zu der Ausgangsleitung 27 aber sperren eine Strömung in umgekehrte Strömungsrichtung.

Für das dargestellte Ausführungsbeispiel ist die Ventileinrichtung 58 als ausschließlich pneumatisch angesteuerte Ventileinrichtung (hier als ein Be- und Entlüftungsventil 59 oder 3/2-Wegeventil) ausgebildet und verfügt über einen pneumatischen Steueranschluss 60. In der in Fig. 1 wirksamen Ventilstellung, welche ohne Druckbeaufschlagung des Steueranschlusses 60 infolge der Wirkung einer Feder eingenommen wird, nimmt die Ventileinrichtung 58 eine Entlüftungsstellung ein, in welcher über die Ventileinrichtung 58 die Ausgangsleitung 27 entlüftet wird, während eine Absperrung eines Anschlusses erfolgt, der über das Rückschlagventil 57 über die Versorgungsleitung 56 mit Druckluft versorgt wird. Eine Druckbeaufschlagung des Steueranschlusses 60 führt die in Fig. 1 nicht wirksame Ventilstellung, bei welcher es sich um eine Belüftungsstellung handelt, herbei, in der die Versorgungsleitung 56 über das Rückschlagventil 57 und die Ventileinrichtung 58 mit der Ausgangsleitung 27 verbunden ist.

Eine pneumatische Ansteuerung des Steueranschlusses 60 erfolgt für das Ausführungsbeispiel gemäß Fig. 1 über ein externes, manuell betätigtes Handbremsventil 61. Das Handbremsventil wird über einen Handbremsventil-Ausgangsanschluss 62 der Anhänger-Bremssteuereinheit 2 mit Druckluft versorgt. Der von dem Handbremsventil 61 infolge der manuellen Betätigung ausgesteuerte Handbremsdruck wird der Anhänger-Bremssteuereinheit 2 über einen Handbremsventil-Eingangsanschluss 63 zugeführt. Der Handbremsventil-Ausgangsanschluss 62 ist hierbei über eine Zweigleitung 64 mit der Versorgungsleitung 56 zwischen den beiden Rückschlagventilen 34, 57 verbunden. Der Handbremsventil-Eingangsanschluss 63 ist über eine Steuerleitung 65 mit dem Steueranschluss 60 verbunden.

Für das dargestellte Ausführungsbeispiel ist das Handbremsventil 61 als Be- und Entlüftungsventil 66 oder 3/2-Wegeventil ausgebildet. Infolge der Beaufschlagung durch eine Feder nimmt das Handbremsventil 61 ohne manuelle Betätigung die in Fig. 1 wirksame Entlüftungsstellung ein, in welcher das Handbremsventil 61 den Handbremsventil-Eingangsanschluss 63 und damit den Steueranschluss 60 entlüftet. Durch manuelle Betätigung eines Betätigungsknopfes 67 des Handbremsventils 61 kann dieses in die Belüftungsstellung überführt werden, in welcher das Handbremsventil 61 über von dem Handbremsventil-Ausgangsanschluss 62 entstammende Druckluft den Handbremsventil-Eingangsanschluss 63 und damit den Steueranschluss 60 belüftet. Somit kann über die Ventilstellung des Handbremsventils 61 eine Umschaltung der Ventileinrichtung 58 herbeigeführt werden. Durch eine optionale Rückführleitung 68 ist der ausgangsseitige Druck des Handbremsventils 61 einer Steuerfläche des Handbremsventils 61 derart zugeführt, dass trotz der Wirkung der Feder das Handbremsventil 61 eine Selbsthaltefunktion derart aufweist, dass das Handbremsventil bei einmal eingenommener Belüftungsstellung (für hinreichenden Druck an dem Handbremsventil-Ausgangsanschluss 62) in der Belüftungsstellung verbleibt.

Mittels der Federspeicherbrems-Ventileinrichtung 21 kann wie folgt eine Federspeicherbrems-Funktion gewährleistet werden:
Befindet sich das Handbremsventil 61 in der in Fig. 1 wirksamen Entlüftungsstellung, liegt an dem Steueranschluss 60 der Ventileinrichtung 58 kein Steuerdruck an, womit dieses die in Fig. 1 wirksame Entlüftungsstellung annimmt. Dies hat die Entlüftung der Ausgangsleitung 27 zur Folge, was wiederum bei entsprechender Beaufschlagung der Federspeicherbremse-Ausgangsanschlüsse 14 die Entlüftung der Federspeicherbremse und damit die Erzeugung einer Federspeicherbremskraft zur Folge hat. Die in Fig. 1 dargestellte Betriebsstellung des Handbremsventils 61 korreliert somit mit einem geparkten Anhänger mit einer Parkbremswirkung, welche über die Federspeicherbremse herbeigeführt wird. Für ein Lösen der Parkbremse erfolgt die manuelle Überführung des Handbremsventils 61 in die in Fig. 1 nicht wirksame Belüftungsstellung, welche auch die Umschaltung der Ventileinrichtung 58 in die Belüftungsstellung zur Folge hat. Dies hat wiederum zur Folge, dass bei einer Weitergabe des Drucks in der Ausgangsleitung 27 an die Federspeicherbremsen die Federspeicherbremsen gelöst werden, so dass die Parkwirkung des Anhängers aufgehoben wird.

Für den Fall, dass wie dargestellt ein Anti-Compound-Ventil 24 Einsatz findet, gelangt der von der Federspeicherbrems-Ventileinrichtung 21 erzeugte Federspeicherbremsdruck nicht in sämtlichen Betriebssituationen zu der Federspeicherbremse. Vielmehr leitet das Anti-Compound-Ventil 24 den höheren der an den beiden Eingangsanschlüssen 26, 28 anliegenden Drücke weiter. Dies hat beispielsweise zur Folge, dass die Entlüftung der Ausgangsleitung 27 durch die Federspeicherbrems-Ventileinrichtung 21, welche an sich die Entlüftung der Federspeicherbremse zur Folge hätte, nicht über das Anti-Compound-Ventil 24 an den Ausgangsanschluss 30 weitergegeben wird, wenn von der Modulator-Ventileinrichtung 20 in der Betriebsbremsleitung 29, also für das dargestellte Ausführungsbeispiel in einem Betriebsbremskreis, ein Betriebsbremsdruck erzeugt wird. Vielmehr wird in diesem Fall der Betriebsbremsdruck über den Federspeicherbremse-Ausgangsanschluss 14 den Federspeicherbremsen zugeführt.

Die Federspeicherbrems-Ventileinrichtung 21 gewährleistet als weitere Federspeicherbrems-Funktion eine Notbremsfunktion wie folgt: Kommt es zu einem Abriss des Kupplungskopfs Vorrat 7 oder einem Defekt in der Vorratsleitung 6, erfolgt über das in diese Entlüftungsrichtung offene Rückschlagventil 54 eine Entlüftung der Ausgangsleitung 27 über den offenen Kupplungskopf Vorrat 7 oder den Defekt der Vorratsleitung 6. Die Entlüftung der Ausgangsleitung 27 hat (ohne durch die Modulator-Ventileinrichtung 20 erzeugten Betriebsbremsdruck) die entsprechende Entlüftung der Federspeicherbremsen zur Folge, womit dann eine Notbremskraft erzeugt wird. Betätigt hingegen in einem derartigen Fall der Fahrer das Bremspedal, steuert die Modulator-Ventileinrichtung 20 einen Betriebsbremsdruck aus, womit das Anti-Compound-Ventil 24 den Betriebsbremsdruck auch den Federspeicherbremsen zuführt und entsprechend dem Betrag des Betriebsbremsdrucks in der Betriebsbremsleitung 29 eine Belüftung der Federspeicherbremse erfolgt, so dass auch zumindest teilweise eine Erzeugung der Notbremskraft mittels eines modulierten Betriebsbremsdrucks in den Betriebsbremsen erfolgen kann.

Möglich ist auch, dass während des normalen Fahrbetriebs nicht der an dem Kupplungskopf Bremse 10 anstehende Bremssteuerdruck über die Magnetventileinrichtung 43 dem Steueranschluss 37 des Relaisventils 38 zugeführt wird. Vielmehr kann der an dem Kupplungskopf 10 anliegende Bremssteuerdruck durch den Sensor 35 erfasst werden. Für in die in Fig. 1 nicht wirksame Ventilstellung umgeschaltetes Magnetventil 41 mit einer Druckluftversorgung der Versorgungsleitung 42 aus dem Behälter 13 erfolgt dann auf Grundlage einer elektronischen Regelung oder Steuerung auf Grundlage eines von der Zugmaschine (u. U. über ein Bussystem und eine geeignete Schnittstelle zwischen Zugfahrzeug und Anhänger bereitgestellten) digitalen Signals oder hilfsweise oder im Redundanzfall für einen Defekt der elektrischen Ansteuerung auf Grundlage des Signals des Sensors 35 durch die Steuereinheit 100 eine Erzeugung eines geeigneten (unter Umständen auch modulierten oder gegenüber dem Signal des Drucksensors 35 je nach vorliegenden Betriebsbedingungen modifizierten) Steuerdrucks, mit dem dann der Steueranschluss 37 beaufschlagt wird und auf dessen Grundlage der Betriebsbremsdruck vorgegeben wird.

Für die im Folgenden beschriebenen Ausführungsbeispiele gilt grundsätzlich das zu den anderen Figuren Gesagte entsprechend. Insbesondere sind in den folgenden Figuren die Modulator-Ventileinrichtungen 20 entsprechend der Modulator-Ventileinrichtung 20 gemäß Fig. 1 ausgebildet und in die Anhänger-Bremssteuereinheit 2 integriert. Des Weiteren ist die mit der Modulator-Ventileinrichtung 20 verbundene Betriebsbremsleitung 29 und die mit der Federspeicherbrems-Ventileinrichtung 21 verbundene Ausgangsleitung 27 auch für die folgenden Ausführungsbeispiele über die Federspeicher-Verarbeitungseinrichtung 23 mit einem Anti-Compound-Ventil 24 und einem Schnellentlüftungsventil 31 bei entsprechender Ausgestaltung und Integration der Federspeicher-Verarbeitungseinrichtung 23 verbunden.

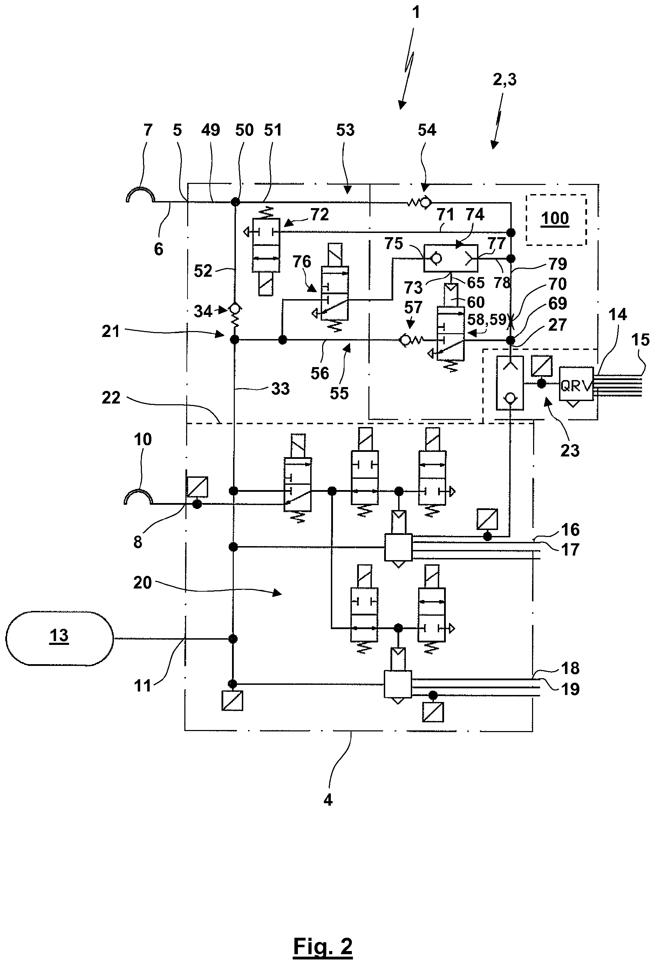

Für das Ausführungsbeispiel gemäß **Fig. 2** ist der Belüftungs-Leitungszweig 55 entsprechend Fig. 1 ausgebildet. Abweichend zu Fig. 1 ist in dem Entlüftungs-Leitungszweig 53 zwischen einer Zusammenführung 69 des Entlüftungs-Leitungszweigs 53 und des Belüftungs-Leitungszweigs 55 mit von der Zusammenführung 69 ausgehender Ausgangsleitung 27 und dem Rückschlagventil 54 eine Drossel 70 angeordnet. Zwischen der Drossel 70 und dem Rückschlagventil 54 zweigt eine Zweigleitung 71 ab, die mit einem Entlüftungsventil 72 oder Magnetventil verbunden ist. Das Entlüftungsventil 72 weist eine, vorzugsweise ohne elektrische Ansteuerung eingenommene Sperrstellung auf, in welcher die Zweigleitung 51 abgesperrt ist, sowie eine vorzugsweise mit Bestromung eingenommene Entlüftungsstellung auf, in welcher die Zweigleitung 71 entlüftet wird.

Der Steueranschluss 60 ist für das Ausführungsbeispiel gemäß Fig. 2 über die Steuerleitung 65 mit einem Ausgangsanschluss 73 eines Wechselventils 74 verbunden. Ein Eingangsanschluss 75 ist über ein Magnetventil 76 an einer Stelle zwischen den Rückschlagventilen 34, 57 mit dem Belüftungs-Leitungszweig 55, hier der Versorgungsleitung 56 verbunden. Das Magnetventil 76 ist hier als 3/2-Wegeventil ausgebildet und nimmt ohne elektrische Bestromung die Ventilstellung gemäß Fig. 2 ein, in welcher der Eingangsanschluss 75 entlüftet wird, und mit Bestromung die andere Ventilstellung einnimmt, in welcher der Eingangsanschluss 75 mit der Versorgungsleitung 56 verbunden wird. Der andere Eingangsanschluss 77 ist über eine Zweileitung 78 mit dem Leitungsabschnitt 79 des Entlüftungs-Leitungszweigs 53 verbunden, welcher zwischen der Drossel 70 und dem Rückschlagventil 54 angeordnet ist.

Die Federspeicherbrems-Ventileinrichtung 21 gemäß Fig. 2 ermöglicht die folgenden Federspeicherbrems-Funktionen:
Ist der geparkte Anhänger über den Kupplungskopf Vorrat 7 mit einem Zugfahrzeug gekoppelt und befindet sich das Entlüftungsventil 72 in der Sperrstellung und das Magnetventil 76 in der Entlüftungsstellung, sind die Federspeicherbremsen über die Ventileinrichtung 58 entlüftet, so dass eine Parkbremswirkung herbeigeführt wird. In diesem Fall kann die Parkbremse, beispielsweise auf Grundlage einer manuellen Herbeiführung eines elektrischen Lösesignals über einen Schalter durch den Fahrer oder automatisch mit der Erkennung der Betätigung des Zündschlüssels oder der Einlegung eines Ganges oder mit Betätigung des Gaspedals, gelöst werden, in dem das Magnetventil 76 elektrisch in die Belüftungsstellung umgeschaltet wird. Diese Umschaltung hat zur Folge, dass der Eingangsanschluss 75 des Wechselventils 74 druckbeaufschlagt wird, womit auch der Steueranschluss 60 belüftet wird und die Ventileinrichtung 58 in die Belüftungsstellung umgeschaltet wird. Dies hat die Belüftung der Federspeicherbremsen zur Folge, womit die Parkbremse gelöst wird. Somit kann zunächst eine Parkfunktion durch die Federspeicherbrems-Ventileinrichtung 21 gewährleistet werden.

Die Federspeicherbrems-Ventileinrichtung 21 gewährleistet auch eine Notbremsfunktion derart, dass bei einem Abriss des Kupplungskopfs Vorrat 7 oder einem Defekt in der Vorratsleitung 6 eine Entlüftung des Leitungsabschnitts 79 erfolgt, welche infolge des geringen Leitungsvolumens verhältnismäßig schnell erfolgt. Eine Entlüftung der Federspeicherbremse erfolgt über den Kupplungskopf Vorrat 7 oder den Defekt der Vorratsleitung 6 infolge der Wirkung der Drossel 70 nicht oder nur sehr langsam. Die Entlüftung des Leitungsabschnitts 79 hat aber zur Folge, dass auch der Eingangsanschluss 77 des Wechselventils 74 sehr schnell entlüftet wird. Da an dem Eingangsanschluss 75 des Wechselventils 74 aber weiterhin Druck ansteht, welcher von dem Behälter 13 über die Vorratsleitung 33 und das Magnetventil 76 in der Belüftungsstellung bereitgestellt wird, bleibt aber zunächst der Steueranschluss 60 druckbeaufschlagt, so dass die Ventileinrichtung 58 die Belüftungsstellung beibehält und Druckluft von dem Vorratsbehälter 13 über die Vorratsleitung 33, die Versorgungsleitung 56, das Rückschlagventil 57 und die Ventileinrichtung 58 die Ausgangsleitung 27 und damit die Federspeicherbremsen beaufschlagt. Wenn aber in einer elektronischen Steuereinheit erkannt wird, dass eine Erzeugung einer Bremswirkung durch die Federspeicherbremsen erforderlich ist, kann eine Umschaltung des Magnetventils 76 in die Entlüftungsstellung erfolgen, womit beide Eingangsanschlüsse 75, 77 des Wechselventils 74 drucklos sind, der Steueranschluss 60 drucklos wird, die Ventileinrichtung 58 die Entlüftungsstellung einnimmt und die Ausgangsleitung 27 und damit die Federspeicherbremsen entlüftet werden. Mittels des Magnetventils 76 kann somit eine Overridefunktion gewährleistet werden, mittels welcher bei einem Abfall des Drucks in der Vorratsleitung 49 eine Notbremsung über die Federspeicherbremse von einem weiteren Kriterium abhängig gemacht werden kann. Hierbei kann als Kriterium ein noch ausreichender Druck in dem Behälter 13 bzw. an dem Behälteranschluss 11 verwendet werden.

Wird das Fahrzeug für gelöste Federspeicherbremsen abgestellt, kann über das Magnetventil 76 in dessen Entlüftungsstellung allein keine Entlüftung des Steueranschlusses 60 der Ventileinrichtung 58 herbeigeführt werden, womit dann auch nicht die Entlüftung der Federspeicherbremse zur Erzeugung einer Parkbremswirkung möglich ist. Grund hierfür ist, dass bei dem Abstellen des Fahrzeugs der Leitungsabschnitt 59 und damit über den Eingangsanschluss 77 auch der Steueranschluss 60 weiterhin druckbeaufschlagt ist. Zur Ausführung einer Parkfunktion dient hierbei das Entlüftungsventil 72: Wird dieses mit dem Abstellen des Anhängers in die Entlüftungsstellung gesteuert bei gleichzeitiger Umschaltung des Magnetventils 76 in die Entlüftungsstellung, erfolgt die Entlüftung des Steueranschlusses 60, die Umschaltung der Ventileinrichtung 58 in die Entlüftungsstellung und damit die Entlüftung der Federspeicherbremse mit der Erzeugung der Parkbremswirkung. Sind auf diese Weise die Federspeicherbremse und der Leitungsabschnitt 79 entlüftet, kann die Bestromung des Entlüftungsventils 72 wieder beseitigt werden und dieses in die Sperrstellung überführt werden, ohne dass dies eine erneute Belüftung der Federspeicherbremse zur Folge hat.

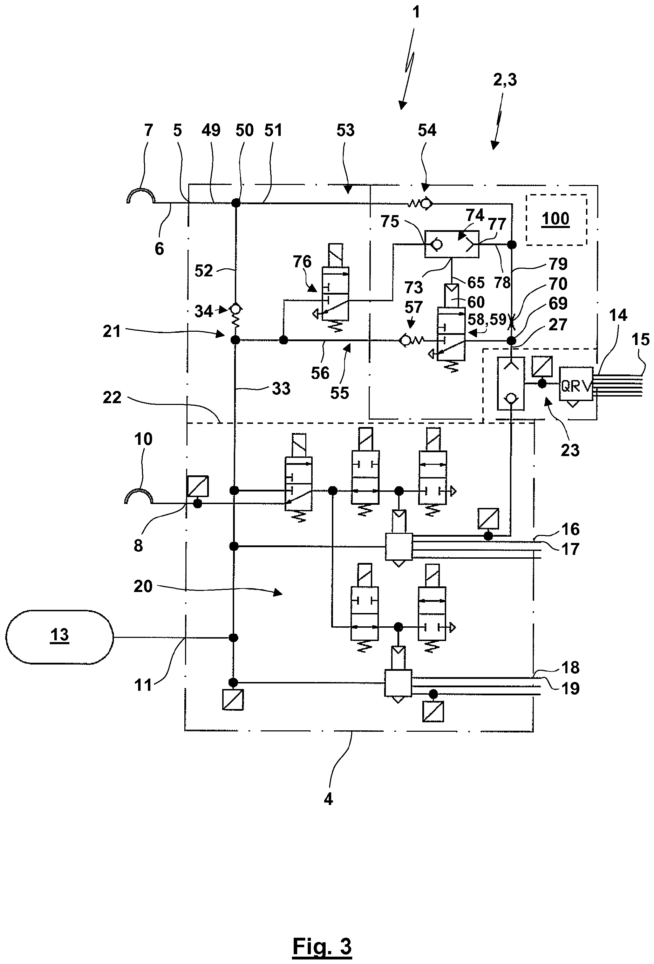

Wie im Ausführungsbeispiel gemäß **Fig. 3** zu entnehmen ist, kann bei ansonsten Fig. 2 entsprechender Ausgestaltung auch der Einsatz der Zweigleitung 71 und des Entlüftungsventils 72 entfallen.

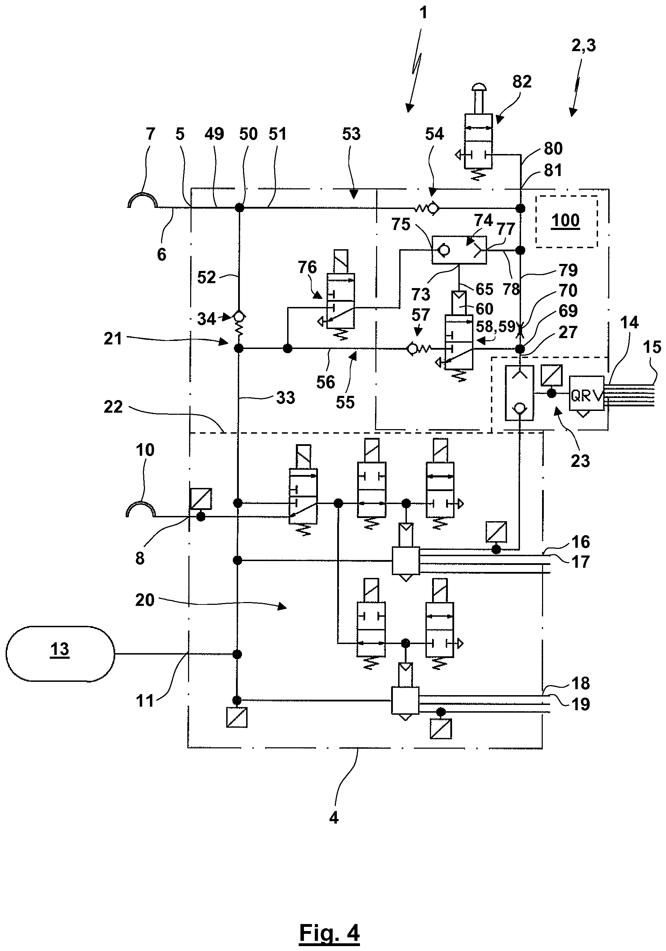

Für das Ausführungsbeispiel gemäß **Fig. 4** ist (bei ansonsten Fig. 2 entsprechender Ausgestaltung) anstelle der in der Anhänger-Bremssteuereinheit angeordneten Zweigleitung 71 mit Entlüftungsventil 72 eine von dem Leitungsabschnitt 79 abzweigende Zweigleitung 80 über einen Handbremsventil-Anschluss 81 mit einem Handbremsventil 82 verbunden. Das Handbremsventil 82 ist hier manuell betätigbar und weist eine Sperrstellung sowie eine Entlüftungsstellung auf. Wie zuvor für die elektrische Ansteuerung des Entlüftungsventils 72 erläutert, kann mit manueller Betätigung des Handbremsventils 82 zur Herbeiführung der Entlüftungsstellung (bei gleichzeitiger Umschaltung des Magnetventils 76 durch Entfall der Bestromung desselben in die Entlüftungsstellung) der Steueranschluss 60 der Ventileinrichtung 58 entlüftet werden, so dass dieses die Entlüftungsstellung einnimmt und zur Erzeugung einer Parkbremswirkung über die Ventileinrichtung 58 die Federspeicherbremsen entlüftet werden. Ist auf diese Weise einmal der Steueranschluss 60 entlüftet, bleibt die Ventileinrichtung 58 in der Entlüftungsstellung unabhängig davon, welche Stellung das Handbremsventil 82 einnimmt. Somit kann der Benutzer durch reine Betätigung des Handbremsventils 82 eine einmal herbeigeführte Parkbremswirkung über die Federspeicherbremsen nicht beseitigen. Vielmehr ist hierfür die elektrische Umschaltung des Magnetventils 76 erforderlich, welche von einer geeigneten Authentifizierung des Benutzers abhängig gemacht werden kann, womit eine Federspeicherbremse-Immobilisierfunktion bereitgestellt werden kann.

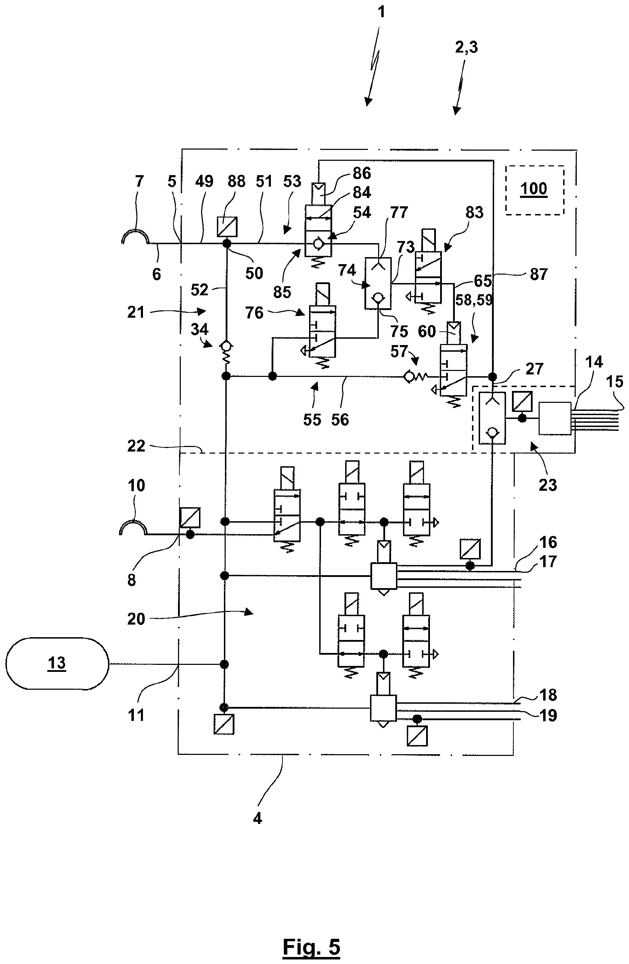

Für das in **Fig. 5** dargestellte Ausführungsbeispiel entspricht der Belüftungs-Leitungszweig 55 mit dem Vorratsleitungszweig 52, dem Rückschlagventil 34, dem Rückschlagventil 57 und der Ventileinrichtung 58 und hinsichtlich der Integration in die Anhänger-Steuereinheit 2 den vorangegangen Ausführungsbeispielen. Allerdings ist hier der Entlüftungs-Leitungszweig 53 nicht unmittelbar über die Zusammenführung 69 mit der Ausgangleitung 27 verbunden. Vielmehr ist der Belüftungs-Leitungszweig 55 mit dem Vorratsleitungszweig 51 über das Rückschlagventil 54 mit dem Eingangsanschluss 77 des Wechselventils 74 verbunden, dessen anderer Eingangsanschluss 75 entsprechend dem Ausführungsbeispiel gemäß Fig. 2 über das Magnetventil 76 mit der Versorgungsleitung 56 verbunden ist. Auch hier ist der Ausgangsanschluss 73 des Wechselventils 74 mit dem Steueranschluss 60 der Ventileinrichtung 58 verbunden. Gemäß Fig. 5 ist aber zwischen dem Ausgangsanschluss 73 des Wechselventils 74 und dem Steueranschluss 60 der Ventileinrichtung 58 ein Magnetventil 83 angeordnet, welches ohne Bestromung die in Fig. 5 wirksame Belüftungsstellung einnimmt, während dies mit elektrischer Bestromung die in Fig. 5 nicht wirksame Entlüftungsstellung einnimmt. Für dieses Ausführungsbeispiel ist der Druck in der Ausgangsleitung 27 ausschließlich von der Ventilstellung der Ventileinrichtung 58 abhängig.

Für das Ausführungsbeispiel gemäß Fig. 5 kann das Rückschlagventil 54 über eine Bypassleitung 84 umgangen werden. Hierbei kann die Bypassleitung 84 separat von dem Rückschlagventil 54 ausgebildet sein und in dieser kann ein pneumatisch gesteuertes oder elektrisch gesteuertes Ventil angeordnet sein, welches eine Öffnungsstellung zur Aktivierung der Bypassleitung 84 sowie eine Schließstellung zum Absperren der Bypassleitung 84 aufweisen kann. Für das dargestellte Ausführungsbeispiel sind Bypassleitung 84 und das Rückschlagventil 54 in ein pneumatisch gesteuertes Ventil 85 integriert, welches in der in Fig. 5 wirksamen Betriebsstellung das Rückschlagventil 54 zur Wirkung bringt, während dieses in der anderen Ventilstellung die Bypassleitung 84 zur Wirkung bringt. Das Ventil 85 verfügt über einen Steueranschluss 86. Der Steueranschluss 86 ist über eine Zweigleitung 87 mit der Ausgangsleitung 27 verbunden.

Gemäß dem in Fig. 5 dargestellten Ausführungsbeispiel ist ein Sensor 88 vorhanden, welcher den Druck in der Vorratsleitung 49 oder an dem Vorratsleitungs-Eingangsanschluss 5 sensiert.

Für das Ausführungsbeispiel gemäß Fig. 5 gewährleistet die Federspeicherbrems-Ventileinrichtung 21 die folgenden Federspeicherbrems-Funktionen:
Wird das Magnetventil 83 in seine Entlüftungsstellung umgeschaltet oder nimmt dieses ohne Bestromung seine Entlüftungsstellung ein, erfolgt eine Entlüftung der Federspeicherbremsen, womit einerseits eine Parkbremswirkung herbeigeführt werden kann, beispielsweise verursacht durch die manuelle Betätigung eines elektrischen Schalters, welcher dann die Umschaltung des Magnetventils 83 in die Entlüftungsstellung bewirkt, oder durch Entfall der elektrischen Leistungsversorgung. Somit kann eine Parkfunktion gewährleistet werden.

Ist der Anhänger von dem Zugfahrzeug abgekuppelt, kann mit einer Umschaltung des Magnetventils 76 in die Belüftungsstellung gewährleistet werden, dass an dem Ausgangsanschluss 73 Druck ansteht. Damit kann dann je nach Bestromung des Magnetventils 83 eine Bremswirkung über die Federspeicherbremsen herbeigeführt werden oder nicht, so dass auch eine Lösefunktion gewährleistet ist.

Befindet sich das Magnetventil 83 in der Entlüftungsstellung und sind auf diese Weise die Federspeicherbremsen aktiviert, kann die Umschaltung des Magnetventils 83 in die Belüftungsstellung, welche für die Beseitigung der Bremswirkung der Federspeicherbremsen erforderlich ist, von einer Authentifizierung durch den Benutzer abhängig gemacht werden, womit eine Federspeicherbremse-Immobilisierfunktion gewährleistet werden kann.

Für einen Fahrbeginn mit angeschlossenem Kupplungskopf Vorrat 7 wird bei wirksamem Rückschlagventil 54 des Ventils 85 das Magnetventil 76 in die Belüftungsstellung überführt, was zur Folge hat, dass der Steueranschluss 60 druckbeaufschlagt wird, so dass Druckluft über das Rückschlagventil 57 durch die Ventileinrichtung 58 zu der Ausgangsleitung 27 und damit den Federspeicherbremsen gelangen kann, womit diese gelöst werden. Gleichzeitig baut sich in der Zweigleitung 87 ein Steuerdruck auf, welcher zur Umschaltung des Ventils 85 in die andere Ventilstellung führt, in welcher die Bypassleitung 84 wirksam wird. Nach dieser Umschaltung des Ventils 85 kann die elektrische Bestromung des Magnetventils 76 beseitigt werden, da dann trotz der Entlüftung des Eingangsanschlusses 75 infolge der Belüftung des Eingangsanschlusses 77 über das Ventil 85 von dem Kupplungskopf Vorrat 7 der Ausgangsanschluss 73 druckbeaufschlagt ist, womit die Belüftungsstellung der Ventileinrichtung 58 aufrechterhalten wird. Kommt es dann zu einer Notbremssituation, erfolgt die Belüftung des Steueranschlusses 60 über das Ventil 85. Diese Entlüftung führt dann zur Aktivierung der Federspeicherbremsen zur Herbeiführung einer Notbremskraft. Infolge der Entlüftung der Ausgangsleitung 27 kehrt das Ventil 85 automatisch in die Ventilstellung gemäß Fig. 5 mit wirksamem Rückschlagventil 54 zurück. Dies hat zur Folge, dass nach einem Wiederankuppeln des Kupplungskopfs Vorrat 7 oder erneuerter Versorgung des Vorratsleitungs-Eingangsanschlusses 5 mit Druckluft nicht automatisch ein Lösen der Federspeicherbremsen erfolgt. Vielmehr ist hierfür die gezielte Bestromung des Magnetventils 76 erforderlich. Wird andererseits erkannt, dass zwar eine Notbremssituation vorliegt, kann die Entlüftung des Steueranschlusses 60 auch (bis zum Vorliegen eines weiteren Kriteriums oder temporär) über den Entlüftungs-Leitungszweig 53 unterbunden werden, indem das Magnetventil 76 bestromt wird, womit der Eingangsanschluss 75 des Wechselventils 74 druckbeaufschlagt wird. Auf diese Weise kann somit eine Overridefunktion gewährleistet werden.

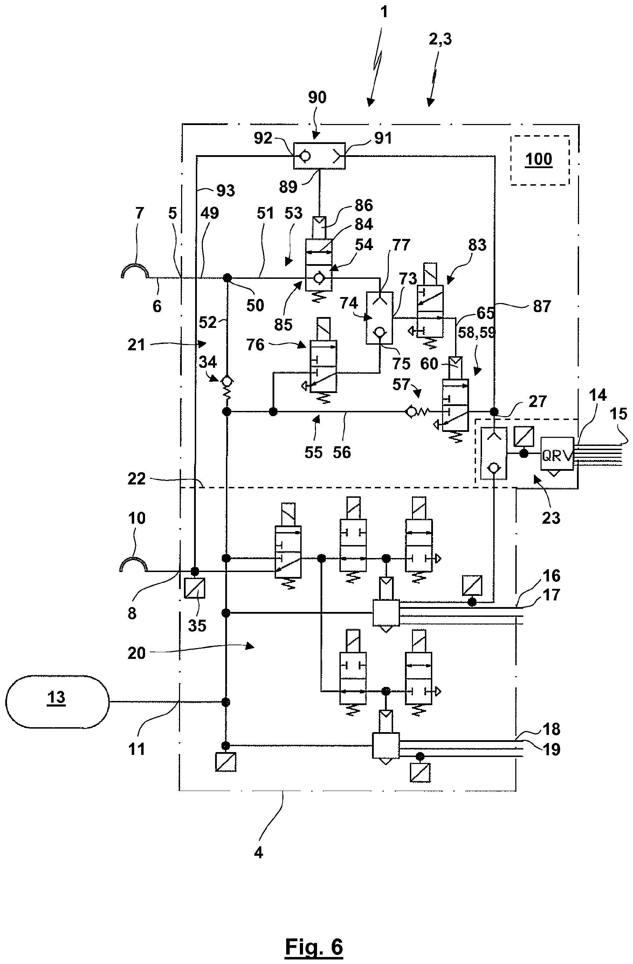

**Fig. 6** zeigt eine grundsätzlich Fig. 5 entsprechende Ausführungsform. Allerdings ist hier der Steueranschluss 86 des Ventils 85 nicht unmittelbar mit der Zweigleitung 87 verbunden. Vielmehr ist hier der Steueranschluss 86 mit einem Ausgangsanschluss 89 eines Wechselventils 90 verbunden. Ein Eingangsanschluss 91 des Wechselventils 90 ist mit der Zweigleitung 87 verbunden, während der andere Eingangsanschluss 92 des Wechselventils 90 über eine Zweigleitung 93 mit dem Druck an dem Bremssteuerleitungs-Eingangsanschluss 8 beaufschlagt ist. Ist für das Ausführungsbeispiel gemäß Fig. 6 die Federspeicherbremse gelöst, kann mittels der Erzeugung eines Bremssteuerdrucks an dem Bremssteuerleitungs-Eingangsanschluss 8, beispielsweise durch Betätigung eines Bremspedals, eine Umschaltung des Ventils 85 mit Aktivierung der Bypassleitung 84 erfolgen. Liegt dann an dem Kupplungskopf Vorrat 7 Druck an, führt dies zu einer Umschaltung der Ventileinrichtung 58 in die Belüftungsstellung, womit die Federspeicherbremse gelöst wird. Eine derart gelöste Federspeicherbremse wird bei hinreichendem Druckaufbau in der Zweigleitung 87 dann auch aufrechterhalten, wenn der Bremssteuerdruck an dem Steuerleitungs-Eingangsanschluss 8 beseitigt wird. Entsprechend kann auch in einer Notbremssituation eine eingefallene Federspeicherbremse über eine Erzeugung eines Bremssteuerdrucks an dem Kupplungskopf Bremse 10 temporär beseitigt werden.

**Fig. 7** zeigt ein Ausführungsbeispiel, bei welcher einerseits die Herbeiführung einer Federspeicherbremswirkung mittels eines Handbremsventils 61 möglich ist, wie dieses für Fig. 1 beschrieben worden ist bei entsprechender Ausgestaltung und Verbindung des Handbremsventils 61 mit der Anhänger-Bremssteuereinheit 2. Auch die Ausgestaltung des Entlüftungs-Leitungszweigs 53 sowie des Belüftungs-Leitungszweigs 55 entspricht grundsätzlich dem in Fig. 1 dargestellten Ausführungsbeispiel. Allerdings ist hier die Versorgungsleitung 63 mit dem Rückschlagventil 34 durch ein pneumatisch gesteuertes Ventil 94 hindurchgeführt, wobei die Vorratsleitung 56 mit dem Rückschlagventil 34 in sämtlichen Ventilstellungen des Ventils 94 unverändert wirksam ist. Das Ventil 94 verfügt über einen Anschluss 95, der (über die Verzweigung 50 und die Vorratsleitung 49) mit dem Vorratsleitungs-Eingangsanschluss 5 verbunden ist. Ein Anschluss 96 des Ventils 94 ist mit dem Bremssteuerleitungs-Eingangsanschluss 8 verbunden. Ein Anschluss 97 des Ventils 94 ist mit dem Belüftungs-Leitungszweig verbunden. Schließlich ist ein Anschluss 98 mit der Modulator-Ventileinrichtung 20 verbunden. Das Ventil 94 verfügt über einen pneumatischen Steueranschluss 99, der mit dem Vorratsleitungszweig 51 verbunden ist. Ohne Beaufschlagung des Steueranschlusses 99 des Ventils 94 nimmt das Ventil 94 die in Fig. 7 wirksame Schaltstellung ein, in welcher dieses den Anschluss 95 über das Rückschlagventil 34 sowohl mit dem Anschluss 97 als auch mit dem Anschluss 98 verbindet, während der Anschluss 96 abgesperrt ist. Für eine mittige Ventilstellung mit einem mittigen, an dem Steueranschluss 99 anliegenden Druck verbindet das Ventil 94 den Anschluss 95 über das Rückschlagventil 34 mit dem Anschluss 97, während die Anschlüsse 96 und 98 abgesperrt sind. Hingegen verbindet das Ventil 94 in der dritten Ventilstellung für den höchsten an dem Steueranschluss 99 anliegenden Druckbereich den Anschluss 95 über das Rückschlagventil 34 mit dem Anschluss 97, während die Anschlüsse 96, 98 unmittelbar miteinander verbunden werden.

Bei dem Ventil 94 handelt es sich um ein Ventil, welches in entsprechender Ausgestaltung auch für andere Einsatzzwecke unter der TEM, TrCM, TrCM+ (mit der Funktion "Safe Parking") vertrieben wird. Bei dem Ventil 94 handelt es sich vorzugsweise um ein 4/3-Wegeventil.

Die elektronische Steuereinheit 100 ist in den Figuren lediglich schematisch dargestellt. Die von der Steuereinheit 100 ausgehenden Steuerleitungen zur Ansteuerung der jeweiligen Magnetventile der Anhänger-Bremssteuereinheit 2 sind hier nicht dargestellt. Auch nicht dargestellt sind die Sensorleitungen von den Sensoren der Anhänger-Bremssteuereinheit 2 zu der Steuereinheit 100. Diese sind auch nicht externe Leitungsverbindungen der Steuereinheit 100 zu elektrischen Schaltern, elektrischen Betätigungsorganen, externen Sensoren und anderen Steuereinheiten dargestellt. Möglich ist, dass der Steuereinheit 100 beliebige andere
- von einem Benutzer an beliebiger Stelle des Nutzfahrzeugzugs vorgegebene Vorgaben bspw. für einen Betriebsbremswunsches, einen Federspeicherbremswunsch und/oder die Herbeiführung einer Federspeicherbremsfunktion,
- Betriebsgrößen und/oder
- Umgebungsgrößen,
- Daten, Kennzeichnungen, Authentifizierungen vom Zugfahrzeug, Diagnoseergebnisse und/oder Fehlermeldungen,
beispielsweise über einen Anschluss an ein Bussystem, zugeführt werden, wobei auch möglich ist, dass die Steuereinheit 100 auch mit anderen Steuereinheiten entsprechende Daten austauscht oder Daten an diese zurücksendet, wobei auch eine Übertragung von Daten an das Zugfahrzeug erfolgen kann. Die Steuerlogik 100 berücksichtigt derartige Vorgaben, Betriebsgrößen und/oder Umgebungsgrößen für die Ansteuerung der Magnetventile und insbesondere für die Ausführung der Federspeicherbremsfunktion. Möglich ist auch, dass die Steuereinheit 100 zumindest zwei Teil-Steuereinheiten aufweist, welche auch redundant ausgebildet sein können zur Erhöhung der Sicherheit. Sofern eine Wechselwirkung mit einem Smartphone eines Benutzers gewünscht ist (insbesondere, um eine Federspeicherbremse-Immobilisierfunktion auszuführen), kann in die Anhänger-Bremssteuereinheit 2 oder sogar die Steuereinheit 100 eine Kommunikationseinrichtung für eine Kommunikation mit dem Smartphone integriert sein.

### BEZUGSZEICHENLISTE

- 1: Anhänger-Bremsanlage
- 2: Anhänger-Bremssteuereinheit
- 3: Baueinheit
- 4: Gehäuse
- 5: Vorratsleitungs-Eingangsanschluss
- 6: Vorratsleitung
- 7: Kupplungskopf Vorrat
- 8: Bremssteuerleitungs-Eingangsanschluss
- 9: Bremssteuerleitung
- 10: Kupplungskopf Bremse
- 11: Behälteranschluss
- 12: Behälterleitung
- 13: Behälter
- 14: Federspeicherbremse-Ausgangsanschluss
- 15: Federspeicherbremsleitung
- 16: Betriebsbremsleitungs-Ausgangsanschluss
- 17: Betriebsbremsleitung
- 18: Betriebsbremsleitungs-Ausgangsanschluss
- 19: Betriebsbremsleitung
- 20: Modulator-Ventileinrichtung
- 21: Federspeicherbrems-Ventileinrichtung
- 22: Trennlinie
- 23: Federspeicher-Verarbeitungseinrichtung
- 24: Anti-Compound-Ventil
- 25: Wechselventil
- 26: erster Eingangsanschluss
- 27: Ausgangsleitung
- 28: zweiter Eingangsanschluss
- 29: Betriebsbremsleitung
- 30: Ausgangsanschluss
- 31: Schnellentlüftungsventil
- 32: Sensor
- 33: Vorratsleitung
- 34: Rückschlagventil
- 35: Sensor
- 36: Sensor
- 37: Steueranschluss
- 38: Relaisventil
- 39: Eingang
- 40: Ausgang
- 41: Magnetventil
- 42: Versorgungsleitung
- 43: Magnetventileinrichtung
- 44: Magnetventil
- 45: Magnetventil
- 46: Entlüftung
- 47: Sensor
- 48: Sensor
- 49: Vorratsleitung
- 50: Verzweigung
- 51: Vorratsleitungszweig
- 52: Vorratsleitungszweig
- 53: Entlüftungs-Leitungszweig
- 54: Rückschlagventil
- 55: Belüftungs-Leitungszweig
- 56: Versorgungsleitung
- 57: Rückschlagventil
- 58: Ventileinrichtung
- 59: Be- und Entlüftungsventil
- 60: Steueranschluss
- 61: Handbremsventil
- 62: Handbremsventil-Ausgangsanschluss
- 63: Handbremsventil-Eingangsanschluss
- 64: Zweigleitung
- 65: Steuerleitung
- 66: Be- und Entlüftungsventil
- 67: Betätigungsknopf
- 68: Rückführleitung
- 69: Zusammenführung
- 70: Drossel
- 71: Zweigleitung
- 72: Entlüftungsventil
- 73: Ausgangsanschluss
- 74: Wechselventil
- 75: Eingangsanschluss
- 76: Magnetventil
- 77: Eingangsanschluss
- 78: Zweigleitung
- 79: Leitungsabschnitt
- 80: Zweigleitung
- 81: Handbremsventil-Anschluss
- 82: Handbremsventil
- 83: Magnetventil
- 84: Bypassleitung
- 85: Ventil
- 86: Steueranschluss
- 87: Zweigleitung
- 88: Sensor
- 89: Ausganganschluss
- 90: Wechselventil
- 91: Eingangsanschluss
- 92: Eingangsanschluss
- 93: Zweigleitung
- 94: Ventil
- 95: Anschluss
- 96: Anschluss
- 97: Anschluss
- 98: Anschluss
- 99: Steueranschluss
- 100: elektronische Steuereinheit

## Patentansprüche

1. Elektronisch gesteuerte Anhänger-Bremssteuereinheit (2), die als Baueinheit (3) ausgebildet ist, in der eine elektronisch gesteuerte Modulator-Ventileinrichtung (20) und eine Federspeicherbrems-Ventileinrichtung (21) angeordnet sind, **dadurch gekennzeichnet, dass** die Federspeicherbremse-Ventileinrichtung einen Federspeicherbremsdruck erzeugt und die Modulator-Ventileinrichtung einen Betriebsbremsdruck aussteuert, wobei der von der Federspeicherbremse-Ventileinrichtung erzeugte Federspeicherbremsdruck unabhängig von dem von der Modulator-Ventileinrichtung ausgesteuerten Betriebsbremsdruck ist und der von der Federspeicherbremse-Ventileinrichtung erzeugte Federspeicherbremsdruck einerseits und der von der Modulator-Ventileinrichtung ausgesteuerte Betriebsbremsdruck andererseits einem Anti-Compound-Ventil (24) zugeführt werden.

2. Elektronisch gesteuerte Anhänger-Bremssteuereinheit (2) nach Anspruch 1, **dadurch gekennzeichnet, dass** die Federspeicherbrems-Ventileinrichtung (21) geeignet ausgebildet, um eine Federspeicherbremsfunktion auszuführen.

3. Elektronisch gesteuerte Anhänger-Bremssteuereinheit (2) nach Anspruch 2, **dadurch gekennzeichnet, dass** die Federspeicherbremsfunktion
a) eine Parkfunktion,
b) eine Lösefunktion,
c) eine Reset-to-Ride-Funktion,
d) eine Schubvermeidungsfunktion,
e) eine Notbremsfunktion,
f) eine Overridefunktion,
g) eine Federspeicherbremse-Immobilisierfunktion,
h) eine geregelte Federspeicherbremsfunktion,
i) eine automatische Parkventil-Betätigungsfunktion,
j) eine benutzergesteuerte Federspeicherbremsfunktion,
k) eine Streckbremsfunktion und/oder
l) eine Testfunktion
ist.

4. Elektronisch gesteuerte Anhänger-Bremssteuereinheit (2) nach einem der vorhergehenden Ansprüche, **dadurch gekennzeichnet, dass** eine elektronische Steuereinheit (100) vorhanden ist, die eine Steuerlogik aufweist, welche
a) sowohl ein Steuersignal für die Modulator-Ventileinrichtung (20) zur Durchführung einer modulierten Bremsung über Betriebsbremsen
b) als auch ein Steuersignal für die Federspeicherbrems-Ventileinrichtung (21) zur Durchführung mindestens einer Federspeicherbremsfunktion
erzeugt.

5. Elektronisch gesteuerte Anhänger-Bremssteuereinheit (2) nach einem der vorhergehenden Ansprüche, **dadurch gekennzeichnet, dass** in der Baueinheit (3) ein Rückschlagventil (34) angeordnet ist, welches einen an einem Behälteranschluss (11) anliegenden Druck gegenüber einem Druckabfall an einem Vorratsleitungs-Eingangsanschluss (5) sichert.

6. Elektronisch gesteuerte Anhänger-Bremssteuereinheit (2) nach einem der vorhergehenden Ansprüche, **dadurch gekennzeichnet, dass** in der Baueinheit (3)
a) das Anti-Compound-Ventil (24) und/oder
b) ein Schnellentlüftungsventil (31)
angeordnet sind/ist.

7. Elektronisch gesteuerte Anhänger-Bremssteuereinheit (2) nach einem der vorhergehenden Ansprüche mit
a) einem Bremssteuerleitungs-Eingangsanschluss (8),
b) einem oder dem Vorratsleitungs-Eingangsanschluss (5),
c) einem Betriebsbremsleitungs-Ausgangsanschluss (16),
d) einem Federspeicherbremse-Ausgangsanschluss (14) und
d) einer oder der elektronischen Steuereinheit (100),
e) wobei die Federspeicherbrems-Ventileinrichtung (21) bei einem Abfall des Drucks an dem Vorratsleitungs-Eingangsanschluss (5) den Federspeicherbremse-Ausgangsanschluss (14) entlüftet.

8. Elektronisch gesteuerte Anhänger-Bremssteuereinheit (2) nach einem der vorhergehenden Ansprüche mit
a) einem Handbremsventil-Ausgangsanschluss (62), an welchem ein Versorgungsdruck für ein Handbremsventil (61) bereitgestellt wird, und
b) einem Handbremsventil-Eingangsanschluss (63), über welchen eine Belüftung und Entlüftung eines oder des Federspeicherbremse-Ausgangsanschlusses (14) herbeiführbar ist.

9. Elektronisch gesteuerte Anhänger-Bremssteuereinheit (2) nach einem der vorhergehenden Ansprüche, **dadurch gekennzeichnet, dass**
a) der Vorratsleitungs-Eingangsanschluss (5) über einen Belüftungs-Leitungszweig (55) und einen parallel zu dem Belüftungs-Leitungszweig (55) angeordneten Entlüftungs-Leitungszweig (53) mit dem oder einem Federspeicherbremse-Ausgangsanschluss (14) verbunden ist,
b) in dem Belüftungs-Leitungszweig (55) ein sich in Richtung des Federspeicherbremse-Ausgangsanschlusses (14) öffnendes Rückschlagventil (34) angeordnet ist, über welches in einer Öffnungsstellung des Rückschlagventils (34) eine Belüftung des Federspeicherbremse-Ausgangsanschlusses (14) und/oder eine Versorgung eines Behälteranschlusses (11) herbeiführbar ist und
c) in dem Entlüftungs-Leitungszweig (53) ein sich in Richtung des Vorratsleitungs-Eingangsanschlusses (5) öffnendes Rückschlagventil (54) angeordnet ist, über welches in einer Öffnungsstellung des Rückschlagventils (54) in einer Notbremssituation eine Entlüftung des Federspeicherbremse-Ausgangsanschlusses (14) herbeiführbar ist.

10. Elektronisch gesteuerte Anhänger-Bremssteuereinheit (2) nach Anspruch 9, **dadurch gekennzeichnet, dass** ein Behälteranschluss (11) vorhanden ist, der über eine Verzweigung des Belüftungs-Leitungszweiges (55), welcher stromabwärts des Rückschlagventils (34) des Belüftungs-Leitungszweiges (34) angeordnet ist, mit Druckluft versorgt wird.

11. Elektronisch gesteuerte Anhänger-Bremssteuereinheit (2) nach Anspruch 9 oder 10, **dadurch gekennzeichnet, dass** der Belüftungs-Leitungszweig (55) eine Ventileinrichtung (58) aufweist oder zu einer Ventileinrichtung (58) führt, welche
a) eine Entlüftungsstellung aufweist, in welcher eine Entlüftung des Federspeicherbremse-Ausgangsanschlusses (14) erfolgt, und
b) eine Belüftungsstellung aufweist, in welcher der Federspeicherbremse-Ausgangsanschluss (14) belüftet wird.

12. Elektronisch gesteuerte Anhänger-Bremssteuereinheit (2) nach Anspruch 11, **dadurch gekennzeichnet, dass** die Umschaltung der Ventileinrichtung (58) in Abhängigkeit von einem Druck an einem Handbremsventil-Eingangsanschluss (63) erfolgt.

13. Elektronisch gesteuerte Anhänger-Bremssteuereinheit (2) nach Anspruch 11, **dadurch gekennzeichnet, dass** die Umschaltung der Ventileinrichtung (58) in Abhängigkeit
a) von einem Druck in dem Belüftungs-Leitungszweig (55) stromaufwärts der Ventileinrichtung (58) und
b) von einem Druck in dem Entlüftungs-Leitungszweig (53)
erfolgt.

14. Elektronisch gesteuerte Anhänger-Bremssteuereinheit (2) nach Anspruch 13, **dadurch gekennzeichnet, dass**
a) die Ventileinrichtung (58) einen Steueranschluss (60) aufweist und
b) ein Wechselventil (74) vorhanden ist,
ba) dessen erster Eingangsanschluss (75) mit dem Belüftungs-Leitungszweig (55) verbunden ist,
bb) dessen zweiter Eingangsanschluss (77) mit dem Entlüftungs-Leitungszweig (53) verbunden ist und
bc) dessen Ausgangsanschluss (73) mit dem Steueranschluss (60) der Ventileinrichtung (58) verbunden ist.

15. Elektronisch gesteuerte Anhänger-Bremssteuereinheit (2) nach Anspruch 14, **dadurch gekennzeichnet, dass** in dem Entlüftungs-Leitungszweig (53) eine Drossel (70) angeordnet ist und der Federspeicherbremse-Ausgangsanschluss (14) über die Drossel (70) mit dem zweiten Eingangsanschluss (77) des Wechselventils (74) verbunden ist.

16. Elektronisch gesteuerte Anhänger-Bremssteuereinheit (2) nach Anspruch 14 oder 15, **dadurch gekennzeichnet, dass** der erste Eingangsanschluss (75) des Wechselventils (74) über ein Magnetventil (76) mit dem Belüftungs-Leitungszweig (55) verbunden ist, wobei das Magnetventil (76) eine Belüftungsstellung, eine Entlüftungsstellung und/oder eine Sperrstellung aufweist.

17. Elektronisch gesteuerte Anhänger-Bremssteuereinheit (2) nach einem der Ansprüche 9 bis 16, **dadurch gekennzeichnet, dass** der Entlüftungs-Leitungszweig (53) über ein Entlüftungsventil (72) oder einen Entlüftungsanschluss mit einer Entlüftung verbunden ist.

18. Elektronisch gesteuerte Anhänger-Bremssteuereinheit (2) nach einem der Ansprüche 14 bis 17, **dadurch gekennzeichnet, dass** zwischen dem Ausgangsanschluss (73) des Wechselventils (74) und dem Steueranschluss (60) der Ventileinrichtung (58) ein Magnetventil (83) angeordnet ist, welches
a) eine Entlüftungsstellung, in welcher der Steueranschluss (60) der Ventileinrichtung (58) entlüftet wird, und
b) eine Durchlassstellung, in welcher der Steueranschluss (60) der Ventileinrichtung (58) mit dem Ausgangsanschluss (73) des Wechselventils (74) verbunden ist,
aufweist.

19. Elektronisch gesteuerte Anhänger-Bremssteuereinheit (2) nach einem der Ansprüche 9 bis 18, **dadurch gekennzeichnet, dass** das Rückschlagventil (54) in dem Entlüftungs-Leitungszweig (53) über ein Ventil (85) umgangen werden kann, dessen Ventilstellung von dem Druck an dem Federspeicherbremse-Ausgangsanschluss (14) abhängig ist.

20. Elektronisch gesteuerte Anhänger-Bremssteuereinheit (2) nach Anspruche 19, **dadurch gekennzeichnet, dass** die Ventilstellung des Ventils (85), über welches das Rückschlagventil (54) in dem Entlüftungs-Leitungszweig (53) umgangen werden kann, auch von dem Druck an dem Bremssteuerleitungs-Eingangsanschluss (8) abhängig ist.

21. Elektronisch gesteuerte Anhänger-Bremssteuereinheit (2) nach einem der vorhergehenden Ansprüche, **dadurch gekennzeichnet, dass**
a) ein pneumatisch gesteuertes Ventil (94) vorhanden ist, wobei
- ein erster Anschluss (95) des Ventils (94) mit dem Vorratsleitungs-Eingangsanschluss (5) verbunden ist,
- ein zweiter Anschluss (96) des Ventils (94) mit dem Bremssteuerleitungs-Eingangsanschluss (8) verbunden ist,
- über einen dritten Anschluss (97) des Ventils (94) der Belüftungs-Leitungszweig (55) verläuft und
- ein vierter Anschluss (98) des Ventils (94) mit der Modulator-Ventileinrichtung (20) verbunden ist,
b) das Ventil (94) in sämtlichen Betriebsstellungen den ersten Anschluss (95) über das in das Ventil (94) integrierte Rückschlagventil (34) des Belüftungs-Leitungszweigs (55) mit dem dritten Anschluss (97) verbindet,
c) das Ventil (94)
- in einer ersten Ventilstellung den zweiten Anschluss (96) mit dem vierten Anschluss (98) verbindet,
- in einer zweiten Ventilstellung den zweiten Anschluss (96) und den vierten Anschluss (98) absperrt und
- in einer dritten Ventilstellung den zweiten Anschluss (96) absperrt und den vierten Anschluss (98) über das Rückschlagventil (34) des Belüftungs-Leitungszweigs (55) mit dem ersten Anschluss (95) verbindet und
d) das Ventil (94) einen pneumatischen Steueranschluss (99) aufweist, welcher mit dem Vorratsleitungs-Eingangsanschluss (5) verbunden ist.

22. Anhänger-Bremsanlage (1) mit einer elektronisch gesteuerten Anhänger-Bremssteuereinheit (2) nach einem der vorhergehenden Ansprüche.

23. Anhänger-Bremsanlage (1) nach Anspruch 22, **dadurch gekennzeichnet, dass** ein Kupplungskopf Vorrat (7) vorhanden ist, welcher über eine Vorratsleitung (6) mit dem Vorratsleitungs-Eingangsanschluss (5) der elektronisch gesteuerten Anhänger-Bremssteuereinheit (2) verbunden ist, wobei in der Vorratsleitung (6)
a) kein Rückschlagventil,
b) kein Löseventil und/oder
c) kein Parkventil
angeordnet ist.

## Claims

1. Electronically controlled trailer brake control unit (2) being embodied as a constructional unit (3) wherein an electronically controlled modulator valve device (20) and a spring brake valve device (21) are arranged, **characterised in that** the spring brake valve device generates a spring brake pressure and the modulator valve device controls a service brake pressure, the spring brake pressure generated by the spring brake valve device being independent on the service brake pressure which is controlled by the modulator valve device and the spring brake pressure generated by the spring brake valve device on the one hand and the service brake pressure being controlled by the modulator valve device on the other hand being transmitted to an anti-compound valve (24).

2. Electronically controlled trailer brake control unit (2) of claim 1, **characterised in that** the spring brake valve device (21) is designed for executing a spring brake function.

3. Electronically controlled trailer brake control unit (2) of claim 2, **characterised in that** the spring brake function is
a) a parking function,
b) a shunting function,
c) a reset-to-ride-function,
d) a function for avoiding pushing,
e) an emergency brake function,
f) an override function,
g) an spring brake immobilizing function,
h) a controlled spring brake function,
i) an automatic parking valve actuation function,
j) a user controlled spring brake function,
k) a stretch brake function and/or
l) a test function.

4. Electronically controlled trailer brake control unit (2) of one of the preceding claims, **characterised in that** an electronic control unit (100) is provided which comprises control logic which generates
a) a control signal for the modulator valve device (20) for executing a modulated braking by the service brakes
b) as well as a control signal for the spring brake valve device (21) for executing at least one spring brake function.

5. Electronically controlled trailer brake control unit (2) of one of the preceding claims, **characterised in that** a check valve is arranged in the constructional unit (3) which secures a pressure biasing a reservoir port (11) against a pressure drop at a supply line inlet port (5).

6. Electronically controlled trailer brake control unit (2) of one of the preceding claims, **characterised in that**
a) the anti-compound valve (24) and/or
b) a quick release valve (31)
are/is arranged in the constructional unit (3).

7. Electronically controlled trailer brake control unit (2) of one of the preceding claims with,
a) a brake control line inlet port (8),
b) a or the supply line inlet port (5),
c) a service brake line outlet port (16),
d) a spring brake outlet port (14) and
d) a or the electronic control unit (100),
e) where the spring brake valve device (21) deaerates the spring brake outlet port (14) when the pressure at the supply line inlet port (5) drops.

8. Electronically controlled trailer brake control unit (2) of one of the preceding claims with
a) a hand brake valve outlet port (62) at which a supply pressure for a hand brake valve (61) is provided and
b) a hand brake valve inlet port (63) by which an aeration and deaeration of a or the spring brake outlet port (14) can be induced.

9. Electronically controlled trailer brake control unit (2) of one of the preceding claims, **characterised in that**
a) the supply line inlet port (5) is connected via an aeration line branch (55) and a deaeration line branch (53) being arranged parallel to the aeration line branch (55) to the or a spring brake outlet port (14),
b) in the aeration line branch (55) a check valve (34) is arranged which opens towards the spring brake outlet port (14) and by which in an open position of the check valve (34) an aeration of the spring brake outlet port (14) and/or a supply for a reservoir port (11) can be induced and
c) in the deaeration line branch (53) a check valve (54) is arranged which opens towards the supply line inlet port (5) and by which in an open position of the check valve (54) in an emergency brake situation a deaeration of the spring brake outlet port (14) can be induced.

10. Electronically controlled trailer brake control unit (2) of claim 9, **characterised in that** a reservoir port (11) is provided which is supplied with pressurized air via a branching of the aeration line branch (55) being arranged upstream from the check valve (34) of the aeration line branch (34).

11. Electronically controlled trailer brake control unit (2) of claim 9 or 10, **characterised in that** the aeration line branch (55) comprises a valve device (58) or leads to a valve device (58) which
a) comprises a deaerating position wherein the spring brake outlet port (14) is deaerated and
b) comprises an aerating position wherein the spring brake outlet port (14) is aerated.

12. Electronically controlled trailer brake control unit (2) of claim 11, **characterised in that** the valve device (58) is switched dependent on a pressure at a hand brake valve inlet port (63).

13. Electronically controlled trailer brake control unit (2) of claim 11, **characterised in that** the valve device (58) is switched dependent on
a) a pressure in the aerating line branch (55) upstream from the valve device (58) and
b) a pressure in the deaerating line branch (53).

14. Electronically controlled trailer brake control unit (2) of claim 13, **characterised in that**
a) the valve device (58) comprises a control port (60) and
b) a shuttle valve (74) is provided,
ba) a first inlet port (75) of the shuttle valve (74) being connected to the aerating line branch (55),
bb) a second inlet port (77) of the shuttle valve (74) being connected to the deaerating line branch (53) and
bc) an outlet port (73) of the shuttle valve (74) being connected to the control port (60) of the valve device (58).

15. Electronically controlled trailer brake control unit (2) of claim 14, **characterised in that** a throttle (70) is arranged in the deaerating line branch (53) and the spring brake outlet port (14) is connected via the throttle (70) to the second inlet port (77) of the shuttle valve (74).

16. Electronically controlled trailer brake control unit (2) of claim 14 or 15, **characterised in that** the first inlet port (75) of the shuttle valve (74) is connected via a solenoid valve (76) to the aerating line branch (55), the solenoid valve (76) comprising an aerating position, a deaerating position and/or a closed position.

17. Electronically controlled trailer brake control unit (2) of one of claims 9 to 16, **characterised in that** the deaerating line branch (53) is connected via a deaerating valve (72) or a deaerating port to an exhaust.

18. Electronically controlled trailer brake control unit (2) of one of claims 14 to 17, **characterised in that** a solenoid valve (83) is arranged between the outlet port (73) of the shuttle valve (74) and the control port (60) of the valve device (58), the solenoid valve (83) comprising
a) a deaerating position wherein the control port (60) of the valve device (58) is deaerated and
b) an open position wherein the control port (60) of the valve device (58) is connected to the outlet port (73) of the shuttle valve (74).

19. Electronically controlled trailer brake control unit (2) of one of claims 9 to 18, **characterised in that** the check valve (54) in the deaerating line branch (53) can be bypassed by a valve (85), the valve position of the valve (85) depending on the pressure at the spring brake outlet port (14).

20. Electronically controlled trailer brake control unit (2) of claim 19, **characterised in that** the valve position of the valve (85) by which it is possible to bypass the check valve (54) in the deaerating line branch (53) also depends on the pressure at the brake control line inlet port (8).

21. Electronically controlled trailer brake control unit (2) of one of the preceding claims, **characterised in that**
a) a pneumatically controlled valve (94) is provided,
- a first port (95) of the valve (94) being connected to the supply line inlet port (55),
- a second port (96) of the valve (94) being connected to the brake control line inlet port (8)
- the aerating line branch (55) passing a third port (97) of the valve (94) and
- a fourth port (98) of the valve (94) being connected to the modulator valve device (20),
b) the valve (94) in all operating position connects the first port (95) via the check valve (34) of the aerating line branch (55) being integrated into the valve (94) to the third port (97),
c) the valve (94)
- in a first valve position connects the second port (96) to the fourth port (98),
- in a second valve position closes the connection between the second port (96) and the fourth port (98) and
- in a third valve position closes the second port (96) and connects the fourth port (98) via the check valve (34) of the aeration line branch (55) to the first port (95) and
d) the valve (94) comprises a pneumatic control port (99) which is connected to the supply line inlet port (5).

22. Trailer brake system (1) comprising an electronically controlled trailer brake control unit (2) of one of the preceding claims.

23. Trailer brake system (1) of claim 22, **characterised in that** a coupling head supply (7) or gladhand supply is provided which is connected via a supply line (6) to the supply line inlet port (5) of the electronically controlled trailer brake control unit (3),
a) no check valve,
b) no shunting valve or
c) no parking valve
being arranged in the supply line (6).

## Revendications

1. Unité de contrôle de freinage de remorque (2) contrôlée électroniquement, qui est conçue comme un module (3), dans lequel sont disposés un dispositif de soupape de modulateur (20) contrôlé électroniquement et un dispositif de soupape de freinage à ressort accumulateur (21), **caractérisée en ce que** le dispositif de soupape de freinage à ressort accumulateur génère une pression de freinage à ressort accumulateur et le dispositif de soupape de modulateur contrôle une pression de freinage de service, dans laquelle la pression de freinage à ressort accumulateur générée par le dispositif de soupape de freinage à ressort accumulateur est indépendante de la pression de freinage de service contrôlée par le dispositif de soupape de modulateur et la pression de freinage à ressort accumulateur générée par le dispositif de soupape de freinage à ressort accumulateur d'une part et la pression de freinage de service contrôlée par le dispositif de soupape de modulateur d'autre part sont introduites dans une soupape anti-composé (24).

2. Unité de contrôle de freinage de remorque (2) contrôlée électroniquement selon la revendication 1, **caractérisée en ce que** le dispositif de soupape de freinage à ressort accumulateur (21) est conçu pour remplir une fonction de freinage à ressort accumulateur.

3. Unité de contrôle de freinage de remorque (2) contrôlée électroniquement selon la revendication 2, **caractérisée en ce que** la fonction de freinage à ressort accumulateur est
a) une fonction de stationnement,
b) une fonction de détachement,
c) une fonction « reset-to-ride »
d) une fonction anti-poussée,
e) une fonction de freinage d'urgence,
f) une fonction « override »,
g) une fonction d'immobilisation du frein à rassort accumulateur,
h) une fonction de freinage à ressort accumulateur régulée,
i) une fonction d'actionnement de soupape de stationnement automatique
j) une fonction de freinage à ressort accumulateur contrôlée par l'utilisateur,
k) une fonction de freinage à étirement et/ou
l) une fonction de test.

4. Unité de contrôle de freinage de remorque (2) contrôlée électroniquement selon l'une des revendications précédentes, **caractérisée en ce qu'**une unité de commande électronique (100) est présente, qui comprend une logique de commande, qui
a) génère aussi bien un signal de commande pour le dispositif de soupape de modulateur (20) pour la réalisation d'un freinage modulé par l'intermédiaire de freins de service
b) qu'un signal de commande pour le dispositif de soupape de freinage à ressort accumulateur (21) pour la réalisation d'au moins une fonction de freinage à resort accumulateur.

5. Unité de contrôle de freinage de remorque (2) contrôlée électroniquement selon l'une des revendications précédentes, **caractérisée en ce que**, dans le module (3), est disposé un clapet anti-retour (34) qui sécurise une pression appliquée à un raccord de récipient (11) contre une chute de pression au niveau d'un raccord d'entrée de conduite de réserve (5).

6. Unité de contrôle de freinage de remorque (2) contrôlée électroniquement selon l'une des revendications précédentes, **caractérisée en ce que**, dans le module (3), sont/est disposé(s)
a) la soupape anti-composé (24) et/ou
b) une soupape de purge rapide (31).

7. Unité de contrôle de freinage de remorque (2) contrôlée électroniquement selon l'une des revendications précédentes, avec
a) un raccord d'entrée de conduite de commande de freinage (8),
b) un ou le raccord d'entrée de conduite de réserve (5),
c) un raccord de sortie de conduite de freinage de service (16),
d) un raccord de sortie de frein à ressort accumulateur (14) et
d) une ou l'unité de commande électronique (100),
e) dans laquelle le dispositif de soupape de freinage à ressort accumulateur (21) purge le raccord de sortie du frein à ressort accumulateur (14) lors d'une chute de la pression au niveau du raccord d'entrée de la conduite de réserve (5).

8. Unité de contrôle de freinage de remorque (2) contrôlée électroniquement selon l'une des revendications précédentes, avec
a) un raccord de sortie de soupape de freinage manuel (62), au niveau duquel est mis à disposition une pression d'alimentation pour une soupape de freinage manuel (61),
b) un raccord d'entrée de soupape de freinage manuel (63), par l'intermédiaire duquel une ventilation et une purge d'un ou du raccord de sortie du frein à ressort accumulateur (14) peut être effectuée.

9. Unité de contrôle de freinage de remorque (2) contrôlée électroniquement selon l'une des revendications précédentes, **caractérisée en ce que**
a) le raccord d'entrée de la conduite de réserve (5) est relié, par l'intermédiaire d'un embranchement de conduite de ventilation (55) et d'un embranchement de conduite de purge (53), disposé parallèlement à l'embranchement de conduite de ventilation (55), avec le ou un raccord de sortie de frein à ressort accumulateur (14),
b) dans l'embranchement de conduite de ventilation (55), est disposé un clapet anti-retour (34) s'ouvrant en direction du raccord de sortie du frein à ressort accumulateur (14), par l'intermédiaire duquel, dans une position d'ouverture du clapet anti-retour (34), une ventilation du raccord de sortie du frein à ressort accumulateur (14) et/ou une alimentation d'un raccord de récipient (11) peut être effectuée et
c) dans l'embranchement de conduite de purge (53), est disposé un clapet anti-retour (54) s'ouvrant en direction du raccord d'entrée de la conduite de réserve (5), par l'intermédiaire duquel, dans une position d'ouverture du clapet anti-retour (54), dans une situation de freinage d'urgence, une purge du raccord de sortie du frein à ressort accumulateur (14) peut être effectuée.

10. Unité de contrôle de freinage de remorque (2) contrôlée électroniquement selon la revendication 9, **caractérisée en ce qu'**un raccord de récipient (11) est présent, qui est alimentée en air comprimé par l'intermédiaire d'une bifurcation de l'embranchement de conduite de ventilation (55), qui est disposée en aval du clapet anti-retour (34) de l'embranchement de conduite de ventilation (34).

11. Unité de contrôle de freinage de remorque (2) contrôlée électroniquement selon la revendication 9 ou 10, **caractérisée en ce que** l'embranchement de conduite de ventilation (55) comprend un dispositif de soupape (58) ou conduit à un dispositif de soupape (58) qui présente
a) une position de purge dans laquelle une purge du raccord de sortie du frein à ressort accumulateur (14) est effectuée et
b) une position de ventilation dans laquelle le raccord de sortie du frein à ressort accumulateur (14) est ventilé.

12. Unité de contrôle de freinage de remorque (2) contrôlée électroniquement selon la revendication 11, **caractérisée en ce que** la commutation du dispositif de soupape (58) est réalisée en fonction d'une pression au niveau d'un raccord d'entrée de soupape de freinage manuel (63).

13. Unité de contrôle de freinage de remorque (2) contrôlée électroniquement selon la revendication 11, **caractérisée en ce que** la commutation du dispositif de soupape (58) est réalisée en fonction
a) d'une pression dans l'embranchement de conduite de ventilation (55) en amont du dispositif de soupape (58) et
b) d'une pression dans l'embranchement de conduite de purge (53).

14. Unité de contrôle de freinage de remorque (2) contrôlée électroniquement selon la revendication 13, **caractérisée en ce que**
a) le dispositif de soupape (58) comprend un raccord de commande (60) et
b) une soupape à deux voies (74) est présente
ba) dont le premier raccord d'entrée (75) est relié avec l'embranchement de conduite de ventilation (55),
bb) dont le deuxième raccord d'entrée (77) est relié avec l'embranchement de conduite de purge (53) et
bc) dont le raccord de sortie (73) est relié avec le raccord de commande (60) du dispositif de soupape (58).

15. Unité de contrôle de freinage de remorque (2) contrôlée électroniquement selon la revendication 14, **caractérisée en ce que**, dans l'embranchement de conduite de purge (53) est disposé un étranglement (70) et le raccord de sortie du frein à ressort accumulateur (14) est relié par l'intermédiaire de l'étranglement (70) avec le deuxième raccord (77) de la soupape à deux voies (74).

16. Unité de contrôle de freinage de remorque (2) contrôlée électroniquement selon la revendication 14 ou 15, **caractérisée en ce que** le premier raccord d'entrée (75) de la soupape à deux voies (74) est relié par l'intermédiaire d'une électrovanne (76) avec l'embranchement de conduite de ventilation (55), dans laquelle l'électrovanne (76) présente une position de ventilation, une position de purge et/ou une position d'arrêt.

17. Unité de contrôle de freinage de remorque (2) contrôlée électroniquement selon l'une des revendications 9 à 16, **caractérisée en ce que** l'embranchement de conduite de purge (53) est relié, par l'intermédiaire d'une soupape de purge (72) ou d'un raccord de purge, avec une purge.

18. Unité de contrôle de freinage de remorque (2) contrôlée électroniquement selon l'une des revendications 14 à 17, **caractérisée en ce que**, entre le raccord de sortie (73) de la soupape à deux voies (74) et le raccord de commande (60) du dispositif de soupape (58), est disposée une électrovanne (83) qui présente
a) une position de purge dans laquelle le raccord de commande (60) du dispositif de soupape (58) est purgé et
b) une position de passage dans laquelle le raccord de commande (60) du dispositif de soupape (58) est relié avec le raccord de sortie (73) de la soupape à deux voies (74).

19. Unité de contrôle de freinage de remorque (2) contrôlée électroniquement selon l'une des revendications 9 à 18, **caractérisée en ce que** le clapet anti-retour (54) dans l'embranchement de conduite de purge (53) peut être contourné par l'intermédiaire d'une soupape (85) dont la position dépend de la pression au niveau du raccord de sortie du frein à ressort accumulateur (14).

20. Unité de contrôle de freinage de remorque (2) contrôlée électroniquement selon la revendication 19, **caractérisée en ce que** a position de la soupape (85), par l'intermédiaire de laquelle le clapet anti-retour (54) dans l'embranchement de conduite de purge (53) peut être contourné dépend également de la pression au niveau du raccord d'entrée de la conduite de commande de freinage (8).

21. Unité de contrôle de freinage de remorque (2) contrôlée électroniquement selon l'une des revendications précédentes, **caractérisée en ce que**
a) une soupape pneumatique (94) est présente, dans laquelle
- un premier raccord (95) de la soupape (94) est relié avec le raccord d'entrée de la conduite de réserve (5),
- un deuxième raccord (96) de la soupape (94) est relié avec le raccord d'entrée de la conduite de commande de freinage (8),
- l'embranchement de conduite de ventilation (55) s'étend par l'intermédiaire d'un troisième raccord (97) de la soupape (94) et
- un quatrième raccord (98) de la soupape (94) est relié avec le dispositif de soupape du modulateur (20),
b) la soupape (94) relie, dans toutes les positions de fonctionnement, le premier raccord (95), par l'intermédiaire du clapet anti-retour (34) de l'embranchement de conduite de ventilation (55), intégré dans la soupape (94), avec le troisième raccord (97),
c) la soupape (94)
- relie, dans une première position, le deuxième raccord (96) avec le quatrième raccord (98),
- obture, dans une deuxième position, le deuxième raccord (96) et le quatrième raccord (98) et
- obture, dans une troisième position, le deuxième raccord (96) et relie le quatrième raccord (98) par l'intermédiaire du clapet anti-retour (34) de l'embranchement de conduite de ventilation (55) avec le premier raccord (95) et
d) la soupape (94) comprend un raccord de commande pneumatique (99) qui est relié avec le raccord d'entrée de conduite de réserve (5).

22. Installation de freinage de remorque (1) avec une unité de contrôle de freinage de remorque (2) contrôlée électroniquement selon l'une des revendications précédentes.

23. Installation de freinage de remorque (1) selon la revendication 22, **caractérisée en ce qu'**une réserve de tête d'accouplement (7) est présente, qui est reliée par l'intermédiaire d'une conduite de réserve (6) avec le raccord d'entrée de conduite de réserve (5) de l'unité de contrôle de freinage de remorque (2) contrôlée électroniquement, dans laquelle, dans la conduite de réserve (6), il n'existe
a) aucun clapet anti-retour,
b) aucune soupape de détachement et/ou
c) aucune soupape de stationnement.
